# DEMANDE DE BREVET EUROPEEN

(11) **EP 2 293 414 A2**
(43) Date de publication de la demande: **09.03.2011**
(21) Numéro de dépôt: 10290462.0
(22) Date de dépôt: 31.08.2010
(51) Int. Cl.: H02J 13/00, H01R 25/00, G06F 1/26

(54) **Dispositif, pour déconnecter au moins un appareil du réseau électrique, qui offre au moins un mode de fonctionnement en dérogation, dispositif configurable, système et procédé de configuration**

(30) Priorité: 08.09.2009 FR 0904293
(62) Demande divisionnaire de: 10009169.3
(71) Demandeur: Ergylink, 92300 Levallois-Perret (FR)
(72) Inventeur: Gilbert, Jérôme, 92300 Levallois Perret (FR)

(57) **Abrégé**

Selon un premier aspect, l'invention concerne un dispositif (1) pour économiser l'énergie électrique offrant au moins un mode de fonctionnement en dérogation. L'invention permet de gérer de manière particulièrement optimisée l'alimentation d'appareils tels que par exemple des enregistreurs vidéo, des décodeurs, des appareils comprenant une batterie rechargeable, des ordinateurs, des appareils entrant dans la catégorie du gros et du petit électroménager. Selon un second aspect, l'invention concerne un dispositif configurable, un système comprenant un tel dispositif et un procédé de configuration particulièrement approprié pour permettre la configuration par le grand public de dispositifs comprenant au moins un microprocesseur et une mémoire non-volatile.

## Description

« Dispositif, pour déconnecter au moins un appareil du réseau électrique, qui offre au moins un mode de fonctionnement en dérogation, dispositif configurable, système et procédé de configuration »

### Domaine technique

Selon un premier aspect, la présente invention concerne un dispositif dont les buts principaux sont d'économiser les consommations d'énergie inutiles d'au moins un appareil et/ou de réduire les risques de sinistres liés à l'utilisation d'au moins un appareil connecté au dispositif. L'invention permet en outre de prolonger la durée de vie des appareils raccordés. L'invention concerne plus particulièrement les dispositifs qui offrent au moins un mode de fonctionnement en dérogation par rapport au mode de fonctionnement attendu d'un économiseur d'énergie à l'état de l'art.

Selon un second aspect, l'invention concerne un dispositif configurable, un procédé de configuration et un système comprenant un dispositif configurable selon le procédé.

Il est prévu que les deux aspects de l'invention soient considérés comme indépendants et/ou en combinaison.

### Etat de la technique antérieure

L'invention, selon un premier aspect, divulgue un dispositif économiseur d'énergie. On connait les dispositifs économiseurs d'énergie à l'état de l'art qui sont agencés pour couper automatiquement l'alimentation des appareils accessoires et, pour certain d'entre eux, pour couper aussi l'alimentation de l'appareil dit pilote lorsque ce dernier est en veille ou à l'arrêt.

On connait de tels dispositifs divulgués dans le brevet FR0605627 (GILBERT) du même inventeur ainsi que des modèles plus spécialisés pour les téléviseurs tels que DE9410498 (MARSCHIK WERNER) ou encore des modèles dits maître-esclave comme décrits dans le brevet US 2005/007712 (SHIM SANG-KEUN).

Des solutions basées uniquement sur l'interprétation de codes de télécommande infrarouge sont également connues. Les dispositifs à l'état de l'art ne permettent pas de gérer convenablement des modes particuliers de fonctionnement correspondant à des cas d'usage dans lesquels l'appareil pilote n'est temporairement pas celui qui est pertinent pour déterminer le comportement du coupe-veille. Par exemple, les coupe-veille connus utilisés dans l'environnement du téléviseur imposent l'état fonctionnel de ce dernier comme référence pour piloter l'alimentation des appareils accessoires. Ce faisant, ils n'offrent pas de solution pleinement satisfaisante dans des cas comme celui de l'utilisation d'un dispositif d'enregistrement programmable des programmes de télévision. La solution proposée par les coupes veilles à l'état de l'art est de connecter les appareils d'enregistrement programmables tels que VCR ou DVR à une prise alimentée en permanence. Cela convient lorsque le dispositif d'enregistrement contient sa propre source de programmes comme par exemple un tuner embarqué. En revanche lorsqu'il s'agit d'enregistrer un programme dont la source est externe à l'enregistreur, par exemple lorsque la source est une Set Top Box raccordée au câble, un décodeur de programmes encryptés, un boîtier récepteur de satellite etc., la seule solution est de raccorder aussi ces appareils à une prise alimentée en permanence. L'utilisation de coupe-veille à l'état de l'art en périphérie d'ordinateurs pose également des problèmes notamment pour permettre des opérations de télémaintenance des systèmes informatiques en environnement professionnel.

Les solutions à l'état de l'art vont à l'encontre des buts recherchés avec un coupe-veille qui sont d'économiser l'énergie consommée et/ou de réduire les risques d'incendie du plus d'appareils possibles lorsque ces appareils ne sont pas utilisés.

Les boitiers tels que les BOX ADSL, les interfaces TV sur IP etc. qui se multiplient dans l'environnement grand public nécessitent l'attente d'un temps non négligeable entre l'instant de la mise en marche et la fourniture du service. Ce délai d'attente considéré comme long par les utilisateurs est peu compatible avec l'utilisation d'un coupe-veille à l'état de l'art.

En outre, les coupe-veille connus ne sont pas adaptés au contrôle de l'alimentation d'appareils portables comprenant des batteries.

Les solutions à l'état de l'art sont inaptes à gérer convenablement le cas des appareils électroménager en particulier en cas de demande de départ de cycle différé ainsi que dans le cas des appareils chauffants.

Il est à noter que les dispositifs mettant en oeuvre l'au moins un mode de fonctionnement en dérogation par rapport au mode de fonctionnement classique d'un coupe-veille en fonction de l'état de l'appareil pilote doivent être apte à être installés, et le cas échéant configurés par le grand public. Or, les solutions à l'état de l'art pour configurer ne permettent pas d'offrir la richesse de configuration et la simplicité d'usage nécessaires à un coût compatible avec la catégorie de produits dans laquelle le dispositif selon le premier aspect de l'invention se situe.

L'invention, selon un second aspect, divulgue des solutions destinées aux utilisateurs grand public pour configurer des dispositifs de toute nature comprenant au moins un microprocesseur et une mémoire non-volatile.

On connaît des dispositifs qui exécutent un programme de configuration et qui gèrent l'interaction avec l'utilisateur.

### Exposé de l'invention

Selon le premier aspect de l'invention, le but est de remédier au moins partiellement aux problèmes évoqués précédemment en proposant un dispositif coupe-veille agencé pour offrir au moins un mode de fonctionnement en dérogation par rapport au fonctionnement d'un coupe-veille à l'état de l'art qui dépend exclusivement de l'état fonctionnel d'un appareil pilote principal. L'au moins un mode de fonctionnement en dérogation permettant d'obtenir du coupe-veille la capacité fonctionnelle additionnelle recherchée, par exemple pour permettre l'enregistrement automatique d'un programme de télévision, pour permettre la mise à jour de contenus dans des équipements accessoires, pour permettre la télémaintenance, les téléchargements de longue durée dans le domaine des ordinateurs ou pour obtenir un fonctionnement compatible avec un ou plusieurs appareils comprenant des accumulateurs rechargeables. L'invention peut donner lieu à une mise en oeuvre dans le cadre d'un coupe-veille spécialisé pour tel ou tel type d'application ou d'appareils. L'invention peut aussi être mise en oeuvre dans le cadre d'un coup-veille universel capable de convenir à tous types d'appareils à l'intérieur d'un même domaine par exemple pour tous les modèles d'appareils audiovisuels ou encore pour tous les modèles d'ordinateurs et de périphériques informatiques. L'invention peut également être mise en oeuvre dans le cadre d'un coupe-veille pouvant convenir à tous types d'appareils quel que soit leur domaine fonctionnel, en particulier un coupe veille capable de convenir aux deux domaines les plus courants que sont l'audiovisuel et l'informatique. L'invention permet aussi de gérer de manière particulièrement optimisée l'alimentation de dispositifs tels que par exemple des enregistreurs vidéo, des décodeurs, des appareils comprenant une batterie rechargeable, des ordinateurs, des appareils entrant dans la catégorie du gros et du petit électroménager.

Pour plus de clarté dans l'exposé de l'invention, on réservera le terme dispositif pour les objets techniques selon l'invention, les termes appareil ou équipement seront utilisés pour nommer des objets techniques non spécifiques à l'invention.

L'invention selon un premier aspect, concerne un dispositif pour déconnecter l'alimentation électrique d'au moins un appareil, l'au moins un appareil comprenant au moins un appareil dit pilote principal, le dispositif comprenant, des moyens de raccordement au réseau électrique, des moyens pour raccorder l'alimentation électrique de l'au moins un appareil, au moins un moyen pour connecter et déconnecter l'alimentation électrique de l'au moins un appareil, des moyens pour piloter l'alimentation électrique de l'au moins un appareil en relation avec l'état fonctionnel de l'au moins un appareil pilote principal et/ou d'une commande de l'utilisateur. Ledit dispositif comprend en outre des moyens pour permettre au moins un mode de fonctionnement en dérogation par rapport au mode de fonctionnement standard d'un dispositif qui connecte ou qui maintient la connexion de l'alimentation électrique de l'au moins un appareil lorsque l'au moins un appareil pilote principal est en marche et qui déconnecte l'alimentation électrique de l'au moins un appareil lorsque l'au moins un appareil pilote principal est en veille ou à l'arrêt. Ledit mode de fonctionnement en dérogation conduit le dispositif à établir ou à maintenir la connexion au réseau électrique de au moins un appareil bien que l'au moins un appareil pilote principal est dans un état fonctionnel d'arrêt ou de veille, et/ou ledit mode de fonctionnement en dérogation conduit le dispositif à déconnecter du réseau électrique au moins un appareil bien que l'au moins un appareil pilote principal est dans un état fonctionnel de marche. On entend par déconnecter l'alimentation électrique, couper la circulation du courant entre le réseau électrique et au moins un pôle de l'alimentation de l'au moins un appareil dans le cas d'une alimentation monophasée. L'au moins un appareil comprend au moins un appareil dit pilote principal. L'appareil ou le groupe d'appareils dit pilote principal étant, seul ou collectivement, l'équipement de référence dont l'état fonctionnel s'impose aux éventuels autres appareils qui sont généralement des accessoires coopérant avec ledit appareil pilote principal. Un groupe d'appareils formant collectivement un appareil pilote principal est par exemple un téléviseur et un lecteur-enregistreur contenant un disque dur. Ainsi, l'alimentation des appareils est coupée si et seulement si le téléviseur est en veille ou à l'arrêt et le lecteur-enregistreur à disque dur est en veille. Ainsi l'alimentation de l'appareil est maintenue pendant toute la procédure d'arrêt de l'appareil à disque dur. L'au moins un appareil au sens de l'invention comprend au moins un appareil qui, s'il est seul, est alors l'appareil dit pilote principal. L'au moins un appareil est le plus souvent externe et distinct relativement au dispositif selon l'invention, chaque entité étant dotée de son propre boitier. Il est cependant prévu dans certaines variantes de mise en oeuvre que le dispositif selon l'invention est intégré dans un appareil de type pilote, par exemple dans un téléviseur, ou dans un appareil de type accessoire qui offre au moins une autre fonction que celles du dispositif.

Le dispositif comprend en outre des moyens pour raccorder l'alimentation électrique de l'au moins un appareil. Il s'agit avantageusement d'une pluralité de prises techniquement dédiées à des catégories d'appareils. Encore plus avantageusement, l'utilisateur est aidé pour les branchements par des marquages et/ou par des couleurs en relation avec les prises qui sont spécifiques à des catégories d'appareils. Cela étant, on ne sort pas du cadre de l'invention si l'on met en oeuvre au moins un mode de fonctionnement en dérogation selon l'invention dans le cadre d'un dispositif qui ne différencie pas les appareils par les prises auxquelles ils sont raccordés. On ne sort pas non plus du cadre de l'invention dans le cas d'un dispositif qui offre un nombre de prise inférieur au nombre d'appareils à raccorder, voir qui offre une seule prise et qui nécessite donc le recours à des prises multiples pour raccorder davantage d'appareils que ne le permettent ses moyens de connexion. On ne sort pas non plus du cadre de l'invention lorsque le dispositif est intégré à un appareil et que les moyens pour raccorder l'alimentation électrique de l'au moins un appareil ne font pas exclusivement appel à des connecteurs accessibles par l'utilisateur mais que ces moyens sont aussi au moins en partie des câblages internes.

Dans certains modes de mise en oeuvre, il est prévu que la reconnaissance des appareils en vue de leur différentiation, en particulier pour la reconnaissance de l'état fonctionnel de !'au moins un appareil pilote, se fait par la reconnaissance d'au moins une caractéristique en relation avec la puissance consommée et/ou encore par la reconnaissance au moins partielle de signaux de télécommande spécifiques aux appareils d'intérêt. On entend par moyen pour connecter et déconnecter l'alimentation électrique de l'au moins un appareil tout moyen de commutation électrique, actif ou passif dont les caractéristiques sont appropriées en fonction de la tension du réseau électrique, de la puissance maximale et de la nature des charges à commuter. Les relais électromécaniques dont les contacts sont adaptés aux charges à commuter sont les moyens de commutation préférés compte tenu de leur robustesse et de leur capacité à isoler véritablement les appareils du réseau électrique lorsqu'ils sont déconnectés. Cela étant, on ne sort pas du cadre de l'invention dans le cas de l'utilisation de moyens de commutation à semi-conducteurs tels que des triacs, des GTO, des combinaisons de thyristors, des IGBT, des MOS FET.

On entend par des moyens pour piloter l'alimentation électrique de l'au moins un appareil en relation avec l'état fonctionnel de l'au moins un appareil pilote principal et/ou d'une commande de l'utilisateur, des moyens analogiques et/ou à base de logique câblée ou programmée pour piloter les moyens de commutation pour alimenter l'au moins un appareil lorsque l'au moins un appareil pilote principal est en marche et couper l'alimentation lorsque l'au moins un appareil pilote principal est en veille ou à l'arrêt. Dans les variantes de mise en oeuvre préférées de l'invention, l'alimentation de l'au moins un appareil pilote principal est déconnectée du réseau électrique lorsqu'il est en veille ou à l'arrêt, ceci pour maximiser les économies et faire bénéficier l'au moins un appareil pilote principal des avantages de l'invention. Au moins dans les variantes de mise en oeuvre où l'alimentation de l'au moins un appareil pilote principal est déconnectée du réseau électrique, le dispositif nécessite une commande de l'utilisateur dont l'effet est de reconnecter l'au moins un appareil pilote principal au réseau électrique. Il est prévu que la commande de l'utilisateur utilise des moyens spécifiques au dispositif, par exemple un bouton dédié au dispositif qui peut être sur le dispositif lui-même et/ou sous la forme d'une commande déportée par des moyens filaires ou sans fils spécifiques au dispositif. Il est aussi prévu que la commande de l'utilisateur utilise des moyens qui ne sont pas spécifiques au dispositif comme par exemple la télécommande infrarouge ou radio d'un autre appareil.

On entend par mode de fonctionnement en dérogation tout mode de fonctionnement qui ne correspond pas au mode de fonctionnement attendu d'un coupe-veille à l'état de l'art relativement à l'état fonctionnel de l'au moins un appareil pilote principal. La mise en oeuvre de l'invention peut conduire par exemple à alimenter en énergie tout ou partie de l'au moins un appareil alors que l'au moins un appareil pilote principal est en veille ou à l'arrêt. A l'inverse, dans certaines variantes de l'invention, la mise en oeuvre de l'invention conduit à couper l'alimentation de tout ou partie de l'au moins un appareil alors que l'au moins un appareil pilote principal est en marche. Ces deux modes de dérogation apparemment mutuellement exclusifs peuvent néanmoins être combinés dans certaines variantes de l'invention particulièrement sophistiquées et/ou configurables selon de nombreuses options. Dans une autre variante de mise en oeuvre de l'invention, la dérogation au fonctionnement attendu d'un coupe-veille standard qui ne différencie pas l'état de veille de l'arrêt complet de l'au moins un appareil pilote principal, repose sur la différenciation de ces deux états fonctionnels. Dans d'autres variantes de mode de fonctionnement en dérogation, l'invention repose sur la différentiation de plusieurs états de marche et/ou de veille ou encore sur la prise en compte d'évènements qui ne sont pas en relation directe avec l'état fonctionnel de l'au moins un appareil pilote principal.

Il est prévu que le dispositif soit agencé pour offrir au moins un mode de fonctionnement en dérogation qui conduit le dispositif à établir ou à maintenir la connexion au réseau électrique de l'au moins un appareil bien que l'au moins un appareil pilote principal est dans un état fonctionnel d'arrêt ou de veille. C'est un type de dérogation dont l'usage le plus fréquent est prévu dans le domaine des équipements audiovisuels, en particulier dans le cadre de l'enregistrement, de la mise à jour de microprogrammes, de données en relation avec un guide des programmes ou un guide des services électronique (respectivement EPG ou ESG selon les acronymes du métier en langue anglaise) et/ou de contenus dans des appareils périphériques de l'au moins un appareil pilote comme il apparaitra plus loin dans les exemples de mise en oeuvre illustrant l'invention. Ce type de dérogation est aussi mis en oeuvre dans le cas des appareils électroménagers qui offrent un départ de cycle différé ou un départ de cycle qui est conditionné par le passage à un tarif avantageux de l'électricité. Ainsi, le dispositif selon l'invention, après avoir reçu une commande de mise en marche de la part de l'utilisateur, maintient l'alimentation de l'appareil bien que ce dernier soit en veille dans l'attente d'une condition de démarrage.

Il est prévu que le dispositif soit agencé pour offrir au moins un mode de fonctionnement en dérogation qui conduit le dispositif à déconnecter du réseau électrique l'au moins un appareil bien que l'au moins un appareil pilote principal est dans un état fonctionnel de marche. Ce type de dérogation répond à des besoins que l'on trouve le plus souvent dans le domaine des équipements informatiques bien qu'il puisse aussi par exemple répondre aussi à des besoins dans le cadre de la gestion d'un parc de Set Top Box d'un opérateur. L'utilisation professionnelle des dispositifs économiseurs d'énergie dans les grandes organisations est souhaitable pour réduire les coûts de fonctionnement en particulier de leur parc d'ordinateurs. Cela étant, les dispositifs économiseurs d'énergie à l'état de l'art ne permettent pas les opérations de télémaintenances telles que des mises à jour de logiciels ayant lieu en dehors des périodes d'utilisation du poste de travail. Le mode de fonctionnement en dérogation résout ce problème en coupant l'alimentation des périphériques et accessoires alors que l'appareil pilote principal reste en marche pour attendre et/ou pour mener à bien les opérations de maintenance. L'ordinateur passe en veille à l'issue des opérations de maintenance et, dans les variantes préférées, voit son alimentation coupée par le dispositif. L'état de marche normal qui implique l'alimentation des périphériques et l'état de marche aux fins de la maintenance sont différenciés par tous moyens sans qu'aucun ne sorte du cadre de l'invention. Par exemple l'appareil émet à destination du dispositif par des moyens filaires ou sans fils une commande indiquant l'état ou un changement d'état fonctionnel dudit appareil, le dispositif adapte alors son état fonctionnel en conséquence. Il est aussi prévu que le changement d'état fonctionnel du dispositif eu égard à celui supposé dudit appareil soit conditionné par un évènement ne reposant pas sur une communication entre les deux. Il peut s'agir par exemple d'un évènement temporel lié au comptage d'une durée ou de la coïncidence avec une consigne horaire et/ou calendaire préalablement configurée. Un cas d'usage similaire où l'au moins un appareil pilote est un ordinateur concerne les téléchargements de longue durée utilisant des protocoles de poste à poste tels que BITTORRENT pendant lesquels seule l'unité centrale de l'ordinateur et les moyens de raccordement à Internet doivent être impérativement alimentés, l'alimentation des autres périphériques pouvant être déconnectée. A l'issue des opérations de téléchargement, il est prévu que l'alimentation de l'appareil pilote principal passe en veille et que si possible soit coupée pour maximiser les économies. Certains appareils électroménagers comme par exemple un fer à repasser sont en marche permanente avec des appels de puissance périodiques pour maintenir la température de la semelle à la température de consigne. Un mode de fonctionnement en dérogation du dispositif est prévu pour discriminer de manière appropriée le mode de marche en utilisation pour lequel l'alimentation doit être maintenue du mode de marche au repos pour lequel l'alimentation doit être coupée au bout d'un temps donné dans cet état.

Il est prévu dans certaines variantes de mise en oeuvre que le dispositif selon l'invention ne comprenne aucun moyen pour mesurer la puissance consommée par au moins un appareil pilote et que l'état fonctionnel de l'au moins un appareil pilote soit connu du dispositif selon l'invention par les commandes qu'il lui envoie et/ou par tout autre moyen apte à déterminer l'état fonctionnel de l'au moins un appareil pilote.

Il est prévu que le dispositif est mis en oeuvre sous une forme décentralisée comprenant au moins deux boitiers qui comprennent chacun en outre des moyens de raccordement au réseau électrique et des moyens pour transmettre de manière bidirectionnelle ou unidirectionnelle des informations à au moins un autre desdits boîtier.

Le dispositif selon l'invention est le plus souvent mis en oeuvre sous une forme centralisée rassemblant les ressources techniques dans un même boitier raccordé par une seule fiche au réseau électrique. Il est aussi prévu que le dispositif soit mis en oeuvre de manière décentralisée. On entend par mise en oeuvre décentralisée du dispositif, la répartition de moyens dans au moins deux boitiers. Chaque boitier comprenant un raccordement au réseau électrique et des moyens additionnels pour transmettre à au moins un autre boitier du même dispositif décentralisé, les informations nécessaires au fonctionnement selon l'invention. Il est prévu que la transmission d'information entre les boîtiers repose sur l'utilisation de moyens sans fils supplémentaires tels que des moyens radiofréquences, des moyens utilisant les infrarouges ou encore par courants porteurs qui ne nécessitent pas de fils en plus de ceux qui sont nécessaires à l'alimentation électrique des boîtiers.

Il est prévu que ce raffinement de l'invention soit mis en oeuvre par exemple pour prolonger les capacités de raccordement du dispositif à des appareils distants les uns des autres sans nécessiter l'utilisation de prolongateurs de câbles. Un autre exemple de mise en oeuvre de l'invention sous une forme décentralisée concerne son application à l'éclairage. Il est ainsi possible de gérer globalement l'extinction automatique d'une pluralité de points d'éclairage standards distincts, chaque point d'éclairage étant possiblement doté de ses propres moyens de commande individuels, à partir de l'extinction de l'une des sources appartenant à cette pluralité. Cette variante du dispositif selon l'invention est avantageusement complétée par des moyens pour mettre en marche, voir le cas échéant pour régler l'intensité de l'éclairage, la pluralité de source d'éclairage à partir de la mise en marche ou d'une manipulation de commande de l'une des sources appartenant à cette pluralité.

Il est prévu que la déconnexion du réseau électrique d'au moins un appareil est en outre déterminée, par la détection ou par l'absence de détection pendant un temps préalablement déterminé, d'un événement sans rapport direct avec l'état fonctionnel de l'au moins un appareil pilote principal.

On entend par évènement sans rapport direct avec l'état fonctionnel de l'au moins un appareil pilote principal, tout évènement dont la source est externe à l'appareil ou dont la source est en rapport avec l'appareil pilote principal mais qui n'est pas directement lié à sa consommation de puissance.

Il s'agit par exemple de la déconnexion automatique d'un appareil électroménager par le dispositif, lorsqu'il détecte une fuite d'eau bien que l'au moins un appareil pilote principal soit en marche. Dans cet exemple, l'au moins un appareil dont il s'agit de couper l'alimentation comprend au moins l'appareil principal qui contient généralement au moins une électrovanne et une pompe de vidange dont l'arrêt de l'alimentation est susceptible de supprimer la cause de la fuite d'eau. Une électrovanne supplémentaire montée sur le robinet d'arrivée d'eau à la sortie de laquelle l'arrivée d'eau de l'appareil électroménager est raccordée complète avantageusement l'installation en tant qu'appareil pour renforcer la sécurité de l'installation. Dans le cadre d'autres applications de l'invention il est prévu que c'est la non-détection d'un éènement pendant un temps déterminé qui provoque la déconnexion automatique d'au moins un appareil. Il peut s'agir par exemple dans le cas d'un fer à repasser, de déconnecter son alimentation électrique lorsque des informations issues d'un capteur de mouvement solidaire de l'appareil ne sont plus reçues par le dispositif pendant un temps déterminé. Pour des variantes du dispositif selon l'invention adaptées à d'autres types d'appareils, l'invention prévoit d'exploiter des informations issues d'un capteur de présence. Il peut s'agir aussi de la surveillance de l'état d'un voyant d'un appareil par un capteur approprié tel qu'une photodiode, une photorésistance ou un phototransistor. Dans ce cas, l'allumage ou l'extinction dudit voyant, selon la variante du dispositif ou sa configuration, constitue l'évènement au sens de l'invention. Par exemple, le dispositif au moyen d'une sonde équipé du capteur approprié, peut déconnecter automatiquement du réseau électrique un modem à courants porteurs lorsque son voyant signalant l'établissement d'une liaison avec un modem distant s'éteint continument pendant un temps préalablement déterminé.

Il est prévu que le dispositif comprend en outre des moyens de mesure donnant une information représentative de la puissance consommée par l'au moins un appareil pilote principal et des moyens pour déterminer l'état fonctionnel de l'au moins un appareil pilote principal, par comparaison entre ladite information et au moins un premier seuil préalablement déterminé, ou à partir de la mesure de la durée pendant laquelle la puissance consommée par l'appareil pilote principal est supérieure ou égale à un premier seuil préalablement déterminé et/ou à partir de la mesure de la durée pendant laquelle la puissance consommée par l'appareil pilote principal est inférieure à un premier seuil préalablement déterminé.

La puissance consommée par l'au moins un appareil pilote principal peut être mesurée ou estimée à partir de la mesure du courant appelé par la charge ainsi constituée. La mesure de courant pouvant se faire par tout moyen usuel tel qu'une mesure de tension aux bornes d'une résistance de puissance de faible valeur encore appelée shunt qui peut être éventuellement être limitée en puissance par le montage de deux diodes en antiparallèle à ses bornes. La mesure de courant peut également être réalisée au moyen d'un transformateur de courant, d'un capteur à effet hall, d'une bobine de Rogowski ou de tout autre moyen sans sortir du cadre de l'invention. Le seuil préalablement déterminé pouvant avoir fait l'objet d'une phase d'apprentissage préalable avec mise en mémoire du résultat obtenu par calcul à partir du résultat d'une ou de plusieurs mesures. Le seuil peut également être préalablement déterminé par un réglage effectué en usine ou par l'utilisateur sur le dispositif au moyen d'un potentiomètre, du choix d'une position de réglage offerte par des moyens discrets tels que commutateur à plusieurs positions, par bouton plus et bouton moins etc. Le seuil préalablement déterminé peut être en rapport avec une valeur absolue réglée ou mémorisée ou encore il peut s'agir d'une valeur relative par rapport à une mesure précédente. Ces mesures pouvant être en outre effectuées pendant une ou plusieurs durées elles-mêmes déterminées. Par exemple l'état de mise en veille peut être réputé détecté si la puissance moyenne consommée continument par la charge pendant une durée déterminée devient inférieure à un tiers de la valeur précédemment mémorisée comme ayant la valeur moyenne la plus élevée consommée continument pendant une durée également déterminée. Il faut entendre par mesure de la puissance consommée toute mesure véritable ou toute évaluation d'au moins le courant circulant dans la charge concernée. On entend par évaluation toute mesure approximative qui est insuffisamment précise, linéaire, indépendante de la forme d'onde ou qui est entachée de tout autre défaut empêchant que l'homme du métier puisse la qualifier de mesure au sens classique de l'électrotechnique. Ladite évaluation étant néanmoins suffisante pour être à la base d'une mise en oeuvre parfaitement fonctionnelle de l'invention.

On ne sort pas du cadre de l'invention si comme dans le cas de l'appareil pilote principal, l'appareil pilote secondaire est formé de plus d'un appareil connecté en parallèle aux moyens d'alimentation électrique proposés par le dispositif selon l'invention.

Il est prévu que pour des appareils étant toujours en marche comme un fer à repasser, une variante appropriée de dispositif selon l'invention en détermine l'état fonctionnel de l'appareil par la mesure de temps. Il peut s'agir par exemple du temps pendant lequel la puissance consommée par l'appareil est supérieure ou égale à un seuil préalablement déterminé, et/ou du temps pendant lequel la puissance consommée par l'appareil est inférieure à un seuil préalablement déterminé. Toutes les catégories de mesures de durées entrent dans le cadre de l'invention, il peut s'agir de mesure de temps absolu à partir d'une horloge ou de comptage d'unités temporelles arbitraires propres au dispositif ou au réseau électrique. La mesure concerne la durée de la phase au cours de laquelle la puissance consommée par l'appareil est supérieure ou égale au seuil préalablement déterminé ou la phase ou la puissance est inférieure au seuil. Les durées pendant les deux phases peuvent aussi être utilisées en combinaison par le dispositif sans sortir du cadre de l'invention. Il peut s'agir aussi de mesures de durées relatives des phases l'une par rapport à l'autre, c'est-à-dire du rapport cyclique de chauffe dans le cas d'un appareil chauffant.

Il est prévu que le dispositif comprend en outre des moyens pour connecter et pour alimenter de manière permanente au moins un appareil.

Il est avantageux que le dispositif comprenne des moyens pour connecter au moins un appareil nécessitant une alimentation permanente, en effet certains appareils comme par exemple des enregistreurs programmables ou des décodeurs prévus pour stocker des contenus numériques en dehors des périodes de visualisation nécessitent une continuité d'alimentation.

Il est prévu que le dispositif comprend en outre des moyens de mesure donnant une information représentative de la puissance consommée par l'au moins un appareil dit l'au moins un appareil pilote secondaire, des moyens pour déterminer l'état fonctionnel de l'au moins un appareil pilote secondaire par comparaison entre ladite information et au moins un second seuil préalablement déterminé, des moyens pour alimenter en énergie au moins un autre appareil lorsque la puissance consommée par l'au moins un appareil pilote secondaire est supérieure ou égale à un second seuil préalablement déterminé quelle que soit la puissance consommée par l'au moins un appareil pilote principal, et pour couper l'alimentation électrique d'au moins un autre appareil lorsque la puissance consommée par l'au moins un appareil pilote secondaire est inférieure à un second seuil préalablement déterminé et lorsque la puissance consommée par l'au moins un appareil pilote principal est inférieure à un premier seuil préalablement déterminé.

Il est prévu que le dispositif comprenne en outre des moyens pour connecter au moins un appareil dit pilote secondaire toujours alimenté en énergie électrique par l'intermédiaire du dispositif, ledit dispositif étant agencé pour piloter l'alimentation électrique d'au moins un des autres appareils connectés en fonction de l'état fonctionnel dudit appareil pilote secondaire. Dans cette variante particulièrement préférée, il s'agit par exemple de connecter un appareil d'enregistrement programmable en fonction d'une horloge calendrier interne ou encore de connecter un appareil connecté à un réseau qui gère lui-même et/ou en coopération avec des ressources distantes également connectées au dit réseau ses propres changements d'état fonctionnels. Typiquement il s'agit du cas d'un enregistreur vidéo de type VCR ou DVR qui par programmation temporelle, par auto-apprentissage ou par tout autre moyen, doit être alimenté continument pour pouvoir gérer lui-même ses changement d'états fonctionnels tels entre mise en veille, enregistrement, et éventuellement lecture. Il peut également s'agir d'une Set Top Box connectée à au moins un serveur via un réseau de diffusion et/ou un réseau de télécommunication. La Set Top Box, pouvant elle-même gérer ses changements d'états fonctionnels en tenant compte d'informations reçues du réseau telles que par exemple le début ou la fin d'une opération de transfert d'un contenu audiovisuel dans une mémoire de la Set Top Box ou encore dans une mémoire de stockage associée à la Set Top Box telle qu'une carte mémoire, un disque dur externe, un lecteur-enregistreur portable etc. Il peut également s'agir du début ou de la fin d'une opération de transfert d'un microprogramme par exemple pour la mise à jour d'un logiciel enfoui dans l'appareil, il peut aussi s'agir d'une opération de collecte d'informations stockées dans une mémoire de l'appareil à des fins de statistiques, de mesure d'audience, de demande de contenus multimédia etc.

L'invention peut également être utilisée dans l'hypothèse d'un appareil combiné comprenant les fonctions d'un appareil pilote principal comme un téléviseur et des fonctions d'un appareil pilote secondaire comme des fonctions d'enregistrement autonomes ou connectées à un réseau. Dans ce cas, l'appareil combiné doit être raccordé aux moyens du dispositif selon l'invention qui sont prévus pour alimenter l'appareil dit pilote secondaire. Dans certaines variantes de mise en oeuvre particulièrement raffinées de l'invention, les moyens pour connecter et pour alimenter de manière permanente au moins un appareil sont configurables pour permettre le raccordement d'au moins un appareil pilote secondaire ou d'au moins un appareil dont l'état fonctionne! est sans effet sur les autres appareils raccordés au dispositif.

Il est prévu dans certaines variantes de mise en oeuvre de l'invention particulièrement préférées que l'au moins un autre appareil dont il s'agit de commander l'alimentation électrique en fonction de la puissance consommée par l'au moins un appareil pilote secondaire ne comprend pas au moins un appareil pilote principal.

Au prix de l'ajout d'au moins un moyen de commutation supplémentaire tel qu'un relais, le mode de fonctionnement en dérogation ne concerne que l'alimentation des appareils comprenant tout ou partie des accessoires comme par exemple des récepteurs ou des décodeurs. L'au moins un appareil principal tel qu'un téléviseur restant non alimenté lorsque tout ou partie des accessoires le sont dans le cadre du mode de fonctionnement en dérogation. Il est prévu que le dispositif selon l'invention comprend en outre des moyens pour recevoir et pour interpréter au moins une commande en relation avec le mode de fonctionnement en dérogation.

Il est prévu qu'une commande de l'utilisateur en rapport avec le fonctionnement en dérogation soit directe, par exemple par appui sur un bouton du dispositif, ou indirecte par réception d'une commande émise par un équipement externe. Lesdits équipements externes sont par exemple une télécommande spécifique au dispositif ou une télécommande associé à un autre équipement dont les signaux peuvent être en tout ou partie utilisés par le dispositif, après le cas échéant une phase d'apprentissage ou de configuration exécutée dans le dispositif et/ou dans la télécommande. Il en va de même pour la commande venant d'un automatisme externe qui peut reposer sur une connexion spécifique avec le dispositif selon l'invention ou sur l'utilisation de moyens génériques comme la reproduction d'au moins un code de télécommande interprétable par le dispositif. C'est le cas par exemple lors de l'utilisation d'un enregistreur muni d'un émetteur infrarouge de type « IR blaster » ou d'un ou de plusieurs émetteur infrarouges ponctuels à placer à proximité d'appareils à commander. Il est prévu que notamment dans le cas d'une utilisation en périphérie d'ordinateurs, le dispositif puisse recevoir des commandes simples et/ou enrichies d'au moins un paramètre tel qu'une durée ou toute autre grandeur apte a modifier le fonctionnement du dispositif. Les solutions minimisant le coût du côté du dispositif seront préférées. Ainsi les commandes émises par un appareil pourront utiliser des moyens compris dans l'appareil comme un port IrDA ou des accessoires à faible coût, par exemple un émetteur infrarouge connectable à un port USB, une simple source de lumière connectable à un port d'ordinateur et insérable dans un logement du dispositif prévu à cet effet, un petit accessoire connectable à une sortie audio etc.

Les commandes directes et indirectes peuvent concerner l'entrée et/ou la sortie du mode de fonctionnement en dérogation sans sortir du cadre de l'invention. Ces commandes peuvent comprendre un ou plusieurs paramètres le cas échéant sans sortir du cadre de l'invention.

Il est prévu que le dispositif selon l'invention comprend en outre des moyens pour gérer au moins en partie automatiquement l'entrée et/ou la sortie du mode de fonctionnement en dérogation.

Les événements en rapport avec le mode de fonctionnement en dérogation du dispositif que sont par exemple l'entrée dans et/ou la sortie de ce mode peuvent résulter de l'arrivée à échéance d'une temporisation, de la coïncidence avec un instant donné. Ils peuvent aussi être en relation avec la détection d'une information en provenance d'un capteur ou encore être associés à une mesure de puissance dans une plage prédéterminée d'au moins un des appareils raccordés au dispositif parmi l'au moins un appareil pilote principal, l'au moins un appareil pilote secondaire le cas échéant ou au moins un autre appareil.

La sortie du mode de dérogation peut aussi être automatique, par exemple après que le dispositif selon l'invention ait observé un cycle de mise en marche de l'appareil pilote principal puis de mise en veille ou à l'arrêt de ce dernier. Ce raffinement évite que l'oubli d'une sortie volontaire de la part de l'utilisateur du mode de fonctionnement en dérogation ne conduise à des pertes d'économie importantes ou à l'exposition à un risque incendie d'une durée illimitée. Toute autre commande non spécifiquement associée à la sortie du mode de dérogation peut être utilisée pour arriver au même résultat sans sortir du cadre de l'invention. Par exemple, après que le dispositif ait été placé dans un mode de fonctionnement en dérogation, toute commande ultérieure reçue par le dispositif le fait sortir de ce mode de fonctionnement, éventuellement à l'échéance d'une temporisation pour laisser le temps à l'utilisateur de replacer le dispositif dans le mode de fonctionnement en dérogation avant tout changement d'état des appareils si cette commande de sortie du mode de fonctionnement en dérogation était fortuite.

La sortie du mode de fonctionnement en dérogation peut se faire par tout moyen sans sortir du cadre de l'invention. Il peut s'agir par exemple d'une commande émise par l'appareil et reçue par le dispositif, il peut s'agir aussi d'un mode fonctionnement en dérogation pour une durée préalablement déterminée par exemple lors d'une étape de configuration ou par la réception d'une commande avec paramètre. Il est prévu que les moyens de gestion au moins en partie automatique concernent l'entrée et/ou la sortie du mode de fonctionnement en dérogation.

Il est prévu que le dispositif selon l'invention comprend en outre une horloge temps réel et/ou un compteur de temps.

Il s'agit le plus souvent d'un cas particulier de gestion au moins en partie automatique du mode de fonctionnement en dérogation où l'entrée et/ou la sortie dans le mode de dérogation est effectuée automatiquement en fonction du temps. Il est possible de gérer cet automatisme à partir d'une horloge temps réel comprise dans le dispositif pour gérer le fonctionnement en fonction de l'heure et/ou de la date vraie. Dans bien des cas il n'est pas nécessaire de mette en oeuvre une horloge temps réel qui représente un surcoût et qui nécessite un réglage. Un simple comptage de temps basé sur une horloge interne ou sur des impulsions issues de l'alimentation sur le réseau électrique permet par exemple de mettre en marche l'au moins un appareil en anticipation par rapport au besoin et de manière récurrente par exemple toutes les 24 heures.

Ce mode de dérogation automatique, vise par exemple à alimenter des équipements à démarrage long en anticipant le besoin de l'utilisateur pour que ce dernier puisse les mettre en marche instantanément iorsqu'il l désire. Ce mode de fonctionnement en dérogation est particulièrement approprié pour la gestion des boitiers tels que les BOX ADSL, les interfaces TV sur IP etc. qui nécessitent l'attente d'un temps non négligeable entre l'instant de la mise en marche et la fourniture du service. Pour les utilisateurs quotidiens d'un ordinateur dont le temps de chargement du système d'exploitation est relativement long à partir de la mise sous tension, le mode de démarrage automatique par l'intermédiaire du dispositif selon l'invention est particulièrement avantageux. Ceci surtout si le système d'exploitation et le matériel de l'ordinateur permettent la gestion d'un mode de mise en veille automatique. Ainsi il est possible de paramétrer le BIOS de l'ordinateur pour qu'il démarre automatiquement à la mise sous tension qui est gérée de manière automatique en anticipation du besoin de l'utilisateur par le dispositif selon l'invention. L'ordinateur, après avoir chargé son système d'exploitation, en l'absence d'utilisation pendant un temps préalablement déterminé dans ses réglages passera automatiquement en veille « chaude », c'est-à-dire que l'ordinateur sera immédiatement prêt à fonctionner dès la sollicitation d'un dispositif d'entrée par un utilisateur, et les autres appareils seront avantageusement déconnectés dans les variantes de mise en oeuvre du dispositif où l'alimentation de l'au moins un appreil pilote principal est gérée séparément de celle des autres appareils.

Le passage en mode actif de l'ordinateur qui est associé à l'alimentation d'au moins un autre appareil par le dispositif peut être arbitrairement décrété lors d'un évènement temps réel ou temps compté mais il peut aussi être détecté par tout moyen en relation avec le dispositif. Par exemple par la détection du franchissement d'un second seuil de puissance préalablement déterminé relativement à l'au moins un appareil pilote principal, par la constatation par le dispositif de variations de la puissance consommée par l'ordinateur qui reflète par exemple une activité du disque dur qui est associée à l'état de marche. D'autre moyens ne prenant pas en compte la puissance peuvent être utilisés tels que la détection de la présence d'un niveau de tension sur un port d'entrée/sortie, la détection du fonctionnement d'un ventilateur etc.

On ne sort cependant pas du cadre de l'invention si l'horloge temps réel et/ou le compteur de temps est utilisé pour changer l'état fonctionnel d'au moins un appareil connecté ou non au dispositif par l'intermédiaire des moyens pour commander son alimentation électrique et/ou des moyens sans fils ajoutés pour lui transmettre des commandes. Il est aussi prévu d'utiliser une horloge temps réel et/ou un compteur de temps dans le dispositif pour gérer la mise en marche différée d'appareils.

Il est prévu que le dispositif comprend en outre des moyens pour signaler un fonctionnement en dérogation.

Dans les variantes de mise en oeuvre de l'invention qui offrent un mode de fonctionnement standard et au moins un mode fonctionnement en dérogation qui est un mode de fonctionnement anormal au sens littéral, il est utile d'informer l'utilisateur lorsque le dispositif fonctionne dans le mode de dérogation. En effet, dans nombre de variantes de mise en oeuvre de l'invention le fonctionnement en dérogation est assimilable à une anomalie par rapport à un fonctionnement normal. Il convient donc de rappeler à l'utilisateur qu'il ne s'agit pas d'une panne du dispositif mais d'un état fonctionnel spécial mais néanmoins normal eu égard à un contexte particulier. Il est prévu d'utiliser un voyant dédié compris dans le dispositif ou encore d'affecter un mode particulier de signalisation d'un voyant à signification multiple. Il peut s'agir par exemple d'un rythme de clignotement et/ou d'une couleur spécifique au mode de fonctionnement du dispositif en dérogation.

Il est prévu que le dispositif comprend en outre des moyens pour connecter et pour gérer de manière appropriée au moins un appareil portable comprenant une source d'énergie autonome rechargeable.

Il s'agit de prévoir dans le dispositif selon l'invention une ou plusieurs prises dédiées ou configurables pour l'alimentation de chargeurs d'appareils contenant une source d'énergie rechargeable. Ce type de prise, qui est alimentée lorsque celles qui sont dédiées aux appareils le sont, peut en outre être seul alimenté, automatiquement, périodiquement et pendant un certain temps lorsque ni un éventuel appareil pilote secondaire ni l'appareil pilote principal ne sont en marche. Ce comportement spécifique pouvant obéir à des algorithmes plus ou moins sophistiqués avec ou non prise en compte du courant appelé par le chargeur. Le but recherché est d'assurer un bon état de la charge de la source d'énergie rechargeable embarquée dans l'appareil portable tout en ne laissant pas alimentés en permanence les moyens de charge. Il s'agit bien encore d'un mode de fonctionnement qui déroge au mode de fonctionnement d'un coupe-veille à l'état de l'art.

Il est prévu que le dispositif comprend en outre des moyens sans fils ajoutés pour transmettre des commandes à au moins un équipement.

Dans une variante évoluée du dispositif, il comprend des moyens d'émission infrarouge pour commander essentiellement la mise en marche et/ou la mise en veille d'au moins un équipement qui n'est pas nécessairement connecté au dispositif.

Dans un mode particulirement avantageux de mise en oeuvre, le dispositif assure en outre une fonction de traducteur de commandes infrarouges pour convertir des commandes reçues par le dispositif en provenance d'une première télécommande en des signaux de télécommande destinés à un équipement ne comprenant pas les signaux de ladite première télécommande. Les caractéristiques du signal de télécommande émis par le dispositif résultant d'une étape d'apprentissage préalable à partir de la télécommande native de l'équipement à commander et/ou d'une étape de configuration préalable où les informations caractéristiques des signaux de télécommande à émettre proviennent d'une base de données après avoir indiqué un ou plusieurs éléments d'identification de l'appareil à commander. La sélection de l'activation et/ou des associations entre les commandes reçues par le dispositif en provenance de ladite première télécommande et les commandes envoyées par le dispositif font avantageusement l'objet d'une étape de configuration appropriée.

Encore plus avantageusement, l'équipement à commander par des commandes émises par le dispositif est connecté à une des prises du dispositif disposant d'une mesure représentative de la puissance consommée par la charge qui lui est raccordée ainsi le dispositif peut contrôler que la mise en marche et/ou la mise en veille de l'équipement est effective et si nécessaire répéter l'envoi de la commande.

Selon le second aspect de l'invention, il s'agit de remédier au moins partiellement aux problèmes évoqués précédemment en proposant un dispositif configurable, un procédé de configuration et un système, comprenant un dispositif configurable, pour mettre en oeuvre le procédé selon l'invention.

Comme dans l'exposé du premier aspect de l'invention, pour plus de clarté on réservera le terme dispositif pour les objets techniques selon l'invention, les termes appareil ou équipement seront utilisés pour nommer des objets techniques non spécifiques à l'invention.

Il est à noter que le second aspect de l'invention peut s'appliquer avantageusement au cas particulier du dispositif selon le premier aspect de l'invention. En effet, La mise en oeuvre de l'invention selon son premier aspect dans ses variantes les plus sophistiquées se heurte au problème de la difficulté de l'absence d'une interface home-machine suffisamment riche pour pouvoir configurer le dispositif d'une manière pouvant être expliquée, comprise et mise en oeuvre pour et par le grand public n'ayant pas de culture technique.

Cela étant, le second aspect de l'invention a vocation à s'appliquer plus généralement à tout dispositif comprenant au moins un microprocesseur et une mémoire non-volatile quel que soit le type, la catégorie et le domaine du dispositif. Le problème résolu par la solution selon le second aspect de l'invention est commun à la plupart des petits dispositifs électroniques ne comprenant pas d'interface homme-machine apte à permettre à l'utilisateur de configurer complètement et/ou simplement le dispositif selon les méthodes à l'état de l'art. Cet aspect de l'invention est particulièrement approprié pour les dispositifs qui sont soumis à des contraintes de coût et/ou de dimensions et/ou de sécurité électrique. Les dispositifs selon le premier aspect de l'invention sont soumis à ces contraintes mais il en va de même de la plupart des appareils électriques destinés à être connecté au réseau électrique basse tension alternatif ou à un réseau très basse tension continu, aux appareils alimentés par des moyens autonomes, aux équipements d'installation du bâtiment ou des véhicules, des gadgets, des jouets etc. Il est cependant prévu dans l'invention que sa mise en oeuvre puisse coexister avec la présence de moyens pour configurer de manière autonome au moins une caractéristique fonctionnelle parmi les plus nécessaires et/ou les plus simples à configurer avec des moyens embarqués limités.

Le second aspect de l'invention convient aussi aux dispositifs de toute nature, de complexité moyenne, qui comprennent des moyens pour configurer au moins une partie des options et des variantes fonctionnelles du dispositif. La mise en oeuvre de l'invention permet de faciliter la configuration dans son ensemble mais aussi le cas échéant d'atteindre une profondeur supérieure dans les réglages de paramètres et d'options fonctionnelles. Paradoxalement, le second aspect de l'invention convient aussi à des dispositifs électroniques sophistiqués qui embarquent des moyens permettant à un utilisateur averti de les configurer pleinement. L'avantage de l'invention dans ce cas étant de permettre à des utilisateurs sans connaissances techniques de configurer des dispositifs complexes d'une manière plus simple. Le second aspect de l'invention offre en outre la possibilité d'utiliser des profils de configuration préparés préalablement par des tiers. L'utilisateur n'ayant alors plus qu'a transférer au moins une information de configuration de son choix dans le dispositif par l'intermédiaire d'un appareil grand public facile à trouver et à manipuler comme par exemple un ordinateur, un téléviseur, un téléphone, un baladeur etc. Le second aspect de l'invention offre aussi la possibilité de confier à des tiers, machines ou humains, en local ou à distance, la préparation de la configuration de leur dispositif selon leurs préférences, l'utilisateur n'ayant plus ainsi que les informations de configuration à transférer dans le dispositif par les moyens usuels.

Le second aspect de l'invention, qui est apte à résoudre des problèmes qui se posent dans le domaine des produits et des utilisateurs grand public, est aussi apte à résoudre des problèmes similaires dans le domaine des produits et/ou des utilisateurs professionnels car la mise en oeuvre de l'invention permet de réduire les coûts matériels et humains par rapport aux solutions à l'état de l'art.

L'invention selon son second aspect, concerne un dispositif comprenant au moins un microprocesseur et une mémoire non-volatile, ledit dispositif comprenant en outre des moyens pour recevoir au moins une information en rapport avec sa configuration, l'au moins une information étant émise par un équipement externe.

Lesdites informations sont avantageusement des informations en relation avec la configuration du dispositif c'est-à-dire en relation avec des choix d'options fonctionnelles offertes par dispositif. Bien entendu on ne sort pas du cadre de l'invention si lesdites informations ne sont pas en rapport exclusif avec la configuration mais sont par exemple des commandes avec le cas échant un ou plusieurs paramètres. Il s'agit d'utiliser les moyens d'interaction riches offert par des équipements dotés d'une interface homme-machine évoluée tels que par exemple un ordinateur ou un téléviseur complété le cas échéant par une Set Top Box appropriée pour préparer la configuration du dispositif. Les moyens qu'offrent potentiellement ces équipements pouvant faire appel de manière non limitative à des images, à des vidéos, à des animations, à du son, à du texte, avec des possibilités de navigation sophistiquées dans l'information, à des choix contextuels consécutifs à la sélection du dispositif à configurer et/ou à des cas d'usage parmi une pluralité et une capacité native à gérer le multilinguisme permettent de préparer la configuration du dispositif d'une manière adaptée à des utilisateurs grand public sans que cela ne renchérisse notablement le coût du dispositif à configurer. Une information résultant des choix de configuration est transmise au dispositif. Ce dernier stockant tout ou partie dédites informations, le cas échéant après transformation, dans une mémoire non volatile. Le fonctionnement du dispositif, le cas échéant après un redémarrage, se fait selon les nouveaux choix de configuration. Les moyens externes peuvent être utilisés pour proposer à l'utilisateur des choix unitaires puis pour en transférer le résultat dans le dispositif. Les moyens externes peuvent aussi être utilisés pour transmettre au dispositif un profil de configuration préalablement établi en fonction d'un cas d'usage donné ou encore en fonction d'un type d'équipement choisi par l'utilisateur comme par exemple dans le cas de l'utilisation d'une Set Top Box d'un opérateur donné. Tout comme dans le cas de la transmission de commandes décrit précédemment, les moyens pour transmettre les informations de l'équipement externe au dispositif peuvent être de toute nature sans sortir du cadre de l'invention. Il peut s'agir de moyens filaires équipés d'éléments de couplage offrant une isolation galvanique lorsque l'électronique du dispositif n'est pas isolée du réseau électrique. Tout port de connexion à l'équipement externe peut être utilisé, par exemple un port USB. Des solutions de transmission à courants porteurs en ligne peuvent être également mises en oeuvre. Les moyens de transmission peuvent avantageusement utiliser des techniques sans fils pour des raisons de sécurité électrique. Il peut s'agir de moyens infrarouges qui offrent l'avantage de pouvoir réutiliser le récepteur infrarouge vraisemblablement déjà compris dans le dispositif pour recevoir des signaux de télécommande. Il est par exemple possible de réutiliser le port IrDA d'un ordinateur qui en est équipé pour transmettre des informations pouvant être reçues par un récepteur infrarouge prévu pour recevoir des signaux de télécommande. Les moyens sans fils peuvent aussi être des moyens radios propriétaires ou conformes à des standards tels que WiFi, WUSB, ZigBee etc. Il est prévu que le dispositif utilise ladite information en relation avec un équipement externe pour en déduire son état fonctionnel, ladite information pouvant être obtenue de l'équipement par connexion d'une fiche en relation avec le dispositif à au moins un des ports d'entrée-sortie dont il dispose. L'information peut être obtenue au moyen d'au moins un capteur en relation avec ie dispositif, le capteur étant placé au contact d'une partie de l'équipement ou dans son l'environnement proche.

Dans une variante particulièrement préférée, il est prévu que les informations reçues par le dispositif sont émises par l'intermédiaire de moyens au moins en partie aptes à la reproduction du son en relation avec un équipement externe.

Il s'agit par exemple de transmettre les informations au dispositif en utilisant la sortie son, un haut-parleur ou un écouteur en relation avec un ordinateur, un téléviseur, une Set Top Box, un baladeur ou tout autre appareil capable de convertir une information en un son comme moyen d'émission dans le cadre de l'invention. Dans une variante de mise en oeuvre particulièrement avantageuse car ne nécessitant que des équipements d'usage courant, communicants et interconnectés, et permettant une utilisation en tout endroit du monde, un téléphone est utilisable en tant que moyen de reproduction du son. Le téléphone est remarquable en ce que l'interopérabilité est effective quelque soit la technologie mise en oeuvre, filaire ou sans fil, commutée ou VoIP. Le téléphone offre en outre l'avantage de permettre la production d'informations de configuration en interagissant avec l'utilisateur au moyen d'un serveur vocal avec retour par reconnaissance vocale ou par des actions au clavier. Ces moyens sont particulièrement adaptés aux utilisateurs grand public. Au choix des exploitants, l'utilisation du téléphone permet en outre la rétribution du service de configuration en utilisant les mécanismes classiques de facturation pour le compte de tiers prévus par les opérateurs de réseaux. A l'issue de l'étape de construction interactive de la configuration, après fourniture par l'utilisateur d'indications permettant au serveur de déterminer l'information adaptée au modèle de dispositif, l'utilisateur est invité à appliquer l'écouteur du combiné sur l'endroit approprié du dispositif pour l'étape de transfert de l'information. Dans une mise en oeuvre raffinée du procédé selon l'invention, le serveur vocal qui à ce stade a connaissance du modèle du dispositif peut indiquer précisément à l'utilisateur où se trouve le capteur sur lequel appliquer l'écouteur du combiné. En effet le microphone permettant au dispositif de capter les signaux audiofréquence issu du téléphone peut être situé à de multiples endroits comme par exemple sous le boitier principal ou sous un boîtier de commande déporté le cas échéant.

Il est prévu que tout type de modulation du son puisse être utilisé sans sortir du cadre de l'invention. Pour simplifier la mise en oeuvre dans le dispositif et diminuer les coûts, un très faible débit est possible compte tenu de la faible quantité d'information à transmettre. Ainsi l'utilisation de types de modulation comme le DTMF ou encore plus simples comme le FSK mettant en oeuvre deux fréquences discrètes utilisés alternativement ou même une modulation de type ASK utilisant une seule fréquence porteuse dans la bande audio téléphonique est prévue dans le cadre de l'invention.

Dans certaine variante de mise en oeuvre il est prévu qu'une première partie de l'information transmise permette au dispositif de calibrer les fréquences et/ou durées lui permettant de distinguer les différents états logiques nécessaires à l'interprétation de l'information. Il est prévu de transmettre l'information de manière asynchrone selon les méthodes classiques de type UART mais il est également prévu de transférer efficacement de manière très simple et robuste une série de nombres associés à des variables codant des comportements et/ou des valeurs de paramètres interprétés au sein du dispositif par une succession d'impulsions. Les champs d'information sont présentés dans un ordre prédéterminé au sein d'une trame dont le début et/ou la fin est signalée par exemple par un état stable pendant un temps supérieur ou égal à une valeur minimale. Dans une variante préférée de mise en oeuvre, chaque élément d'information est géré de manière autonome avec son propre délimiteur et son étiquette ce qui autorise des émissions limitées à la stricte quantité d'information nécessaire ce qui à pour avantage de limiter la durée de l'étape d'émission et de limiter les risques d'erreurs de transmissions. Il est prévu que la fin de la séquence de transfert d'information puisse être détectée par le dispositif par tout moyen, par exemple de manière indirecte après avoir reçu le nombre attendu de champs d'information dans un temps donné ou de manière directe en détectant une information codant la fin de séquence de transfert telle qu'un état stable d'une durée supérieure à celui codant la fin d'un champ d'information.

Il est à noter que l'invention prévoit que le transducteur assurant l'interface avec le dispositif et qui est connecté à une sortie de l'équipement externe qui est normalement destinée à reproduire une information sonore peut être inapte à reproduire le son. Il peut s'agir par exemple d'une led avec une électronique simple d'adaptation pour transférer l'information au dispositif par couplage optique. Le dispositif comprenant dans ce cas un capteur optique ayant une longueur d'onde appropriée. Le transducteur peut aussi être par exemple une bobine permettant de transférer l'information au dispositif par couplage magnétique. Le dispositif comprenant dans ce cas une bobine et une électronique appropriée.

Dans une variante particulièrement élaborée de l'invention, il est prévu d'utiliser à la fois la sortie écouteur et l'entrée microphone d'un ordinateur pour réaliser une interface bidirectionnelle avec le dispositif qui réutilise la chaine standard de décodage, le cas échéant d'encodage et de gestion des contenus audio .

Quel que soient les moyens de réception mis en oeuvre dans le dispositif, dans le cas d'un procédé de transmission unidirectionnel, il est prévu qu'un code de détection d'erreur soit ajouté aux informations utiles à l'émission pour permettre au dispositif de détecter une erreur de transmission, de ne pas tenir compte de l'information corrompue et/ou de signaler le problème à l'utilisateur par exemple par un clignotement spécifique d'un voyant pour qu'il recommence la procédure de transfert d'information.

Il est prévu qu'avantageusement, les moyens mis en oeuvre pour recevoir les informations émises par l'intermédiaire de moyens au moins en partie aptes à la reproduction du son en relation avec un équipement externe sont en outre aptes à émettre des sons.

Il est particulièrement avantageux d'utiliser un transducteur réversible pour la mise en oeuvre de l'invention. L'utilisation de transducteurs réversibles comme par exemple un transducteur piézoélectrique ou un haut-parleur électrodynamique permet de recevoir l'information sonore transportant l'au moins une information en rapport avec la configuration du dispositif tout en offrant au dispositif dans le cadre de son fonctionnement, et avec un surcoût faible ou inexistant, la possibilité d'émettre des sons tels que des bips. Une fonction buzzer est souvent mise en oeuvre dans les petits appareils pour compléter une interface utilisateur généralement limitée. Lorsque le dispositif nécessite un buzzer pour son propre fonctionnement alors la mise en oeuvre de la solution de configuration selon l'invention peut se faire sans surcoût par exemple en pilotant un transducteur piézoélectrique par une broche de microcontrôleur pouvant être exploitée selon les instructions du logiciel en sortie numérique ou en entrée de convertisseur analogique-numérique.

Il est prévu que le dispositif comprend en outre une pièce de couplage acoustique possédant une face apte à être placée en contact avec une paroi et un alésage apte à recevoir un écouteur.

Une pièce de couplage acoustique réalisée dans un matériau souple tel qu'une mousse dense ou un matériau élastomère est agencée pour offrir une surface plane apte à créer un contact, relativement étanche aux bruits extérieurs, avec une paroi telle que la paroi percée d'un combiné téléphonique d'où les sons sont émis. Cette surface plane peut en outre faire fonction de patin ne rayant pas la surface de pose sous la face inférieure d'un boitier. Ladite pièce de couplage comprend en outre un alésage d'un diamètre permettant l'insertion et le maintien d'un écouteur standard en position de couplage acoustique par un serrage dû à l'élasticité du matériau et à un diamètre d'alésage qui est légèrement inférieur au diamètre extérieur de l'écouteur.

Il est prévu dans une autre variante que les informations reçues par le dispositif sont émises par l'intermédiaire de moyens au moins en partie aptes à la reproduction d'images en relation avec un équipement externe.

Il s'agit par exemple de transmettre les informations au dispositif en utilisant l'écran d'un ordinateur, d'un téléviseur ou de tout autre appareil comprenant un écran émettant de la lumière comme moyen d'émission. L'utilisateur étant invité à poser tout ou partie du dispositif comprenant au moins un capteur de lumière visible sur une zone de l'écran. Il est prévu avantageusement de moduler la luminosité des pixels selon les deux états extrêmes correspondant à 0 et 100% de la luminosité des pixels de la zone d'émission. L'invention prévoit que le capteur de lumière visible est capable de discriminer directement deux états de luminosité de la zone d'émission. Tout type de codage est envisageable sans sortir du cadre de l'invention ainsi que les méthodes de transmission décrites précédemment dans le cadre de l'utilisation du son pour transporter l'information. Il est par exemple possible de coder plusieurs états logiques en fonction de la durée d'illumination de la zone d'émission. Il est prévu également de discriminer un zéro logique et une fin de champ d'information en fonction de la durée d'extinction de la zone d'émission. Avantageusement le capteur de lumière visible est agencé pour ne pas être illuminé fortement en usage normal, cet objectif étant atteint en plaçant ledit capteur sous un boitier. L'ajout d'un filtre coloré devant le capteur est avantageux pour augmenter l'immunité vis-à-vis de sources d'éclairement présentes dans l'ambiance en utilisation normale. Il est prévu que la réjection de signaux parasites soit améliorée en filtrant le signal issu de capteur dans le domaine temporel pour exclure tout ou partie des signaux hors de la bande de fréquence utile. Ce filtrage temporel est effectué dans le domaine numérique et/ou sous forme de constantes de temps mettant en oeuvre au moins un condensateur dans l'interface du capteur. Il est prévu l'utilisation d'une matière diffusante ou un traitement de surface pour réaliser une fusion des contributions unitaire des pixels de la zone d'émission et/ou une intégration de la contribution lumineuse de plusieurs lignes dans le cas d'un écran à balayage. Le capteur de lumière approprié pour mettre en oeuvre l'invention peut être par exemple un phototransistor, un photodarlington, une photodiode, une cellule photovoltaïque, un photo condensateur ou une photorésistance. L'interface du capteur comprend des moyens pour discriminer directement deux états logiques en relation avec au moins deux niveaux d'éclairement. Il peut s'agir par exemple d'un simple comparateur, d'un trigger de Schmidt. L'invention permet une mise en oeuvre économique par connexion directe du capteur à une entrée d'un microcontrôleur dont les caractéristiques d'association de lecture d'un état logique en fonction de la tension d'entrée et le cas échéant la présence d'une source de courant imposant un état logique par défaut sont exploitées.

Il est prévu que tout ou partie de la configuration du dispositif est préparée à partir d'un équipement externe distinct dudit dispositif, ledit équipement externe étant apte à interagir avec l'utilisateur, l'information en relation avec la configuration étant transmise par un équipement externe au dispositif qui la stocke, possiblement après transformation, dans une mémoire non volatile, le dispositif adaptant tout ou partie de ses caractéristiques fonctionnelles en conséquence.

La préparation de la configuration, sous la forme d'une ou de plusieurs étapes fait appel avantageusement à des moyens multimédia. Les étapes de préparation et/ou d'émission des informations à destination du dispositif peuvent reposer sur un programme exécuté dans un ordinateur, dans un téléviseur évolué ou dans une Set Top Box raccordée à un téléviseur standard. Ces mêmes opérations sont également exécutables sur un serveur connecté à Internet et sont opérées à distance dans les équipements dotés d'un écran et d'un navigateur standard. Il est prévu que la préparation de la configuration puisse se faire globalement pour toutes les options fonctionnelles d'un modèle donné de dispositif selon l'invention. Il est aussi prévu que la préparation de la configuration ne porte que sur des sous-ensembles d'options fonctionnelles et/ou sur une option donnée. Chaque étape de préparation qu'elle soit globale, par groupe ou unitaire est suivie par une étape de transmission de l'information correspondante au dispositif.

Il est aussi prévu que des configurations types soient préparées préalablement à leur utilisation, par exemple par le constructeur du dispositif et mises à disposition des utilisateurs par exemple sur un site web. Ces configurations étant matérialisées sous forme de fichiers de données de tous types en particulier de données codant des contenus audio ou vidéo téléchargeables selon que le dispositif mette en oeuvre des moyens de réception et d'exécution en rapport avec le son et/ou l'image. Il est prévu en outre que la configuration puisse se faire globalement pour tous les choix et paramètres du dispositif avant transmission au dispositif de la totalité de l'information associée. Dans une variante préférée, la configuration est gérée choix par choix et/ou réglage par réglage permettant des actions de configurations unitaires ou par sous-ensemble de choix et/ou de réglages selon les besoins de l'utilisateur à un niveau de complexité minimal. Pour se faire, l'information comprend des blocs unitaires autonomes qui sont structurés pour permettre l'identification de chaque bloc afin d'associer les données du bloc à l'au moins une variable correspondante du dispositif.

Il est prévu que le dispositif comprend en outre des moyens pour configurer de manière autonome au moins une de ses caractéristiques fonctionnelles. Bien que l'invention puisse être mise en oeuvre dans le dispositif pour configurer entièrement ses options fonctionnelles, il est avantageux de prévoir en outre des moyens matériels et logiques pour permettre à l'utilisateur de configurer la ou les options fonctionnelles les plus importantes dans le cadre de l'utilisation du dispositif. Dans les exemples de mise en oeuvre préférés de l'invention, toutes les options et toutes les valeurs de réglage des paramètres de fonctionnement sont configurables selon l'invention. Ces moyens sont complétés par des moyens autonomes offrant l'avantage de ne pas nécessiter d'équipement tiers mais ne permettant de configurer qu'un ou deux paramètres de base indispensables au fonctionnement du dispositif. Le cas échéant, les moyens de configuration autonomes offrent une possibilité de réglage plus réduite, par exemple selon deux états, ce même paramètre offrant davantage de possibilités de réglage par la mise en oeuvre de l'invention.

Selon le second aspect de l'invention, il est prévu un procédé pour configurer tout dispositif comprenant un microprocesseur et une mémoire non volatile. Il est aussi prévu de ce procédé soit mis en oeuvre dans un dispositif selon le premier aspect de l'invention. Ce procédé comprend les étapes suivantes:
- une étape de préparation de l'au moins une information en rapport avec la configuration du dispositif, cette étape étant exécutée à partir des ressources d'un équipement, distinct dudit dispositif, ledit équipement étant apte à interagir avec l'utilisateur; et
- une étape d'émission d'au moins une information en rapport avec la configuration du dispositif par un équipement pouvant être confondu avec, ou distinct de, celui ayant exécuté l'étape de préparation de la configuration; et
- une étape de réception par le dispositif d'au moins une information en rapport avec sa configuration; et
- une étape de stockage dans une mémoire non-volatile du dispositif de tout ou partie de l'au moins une information en rapport avec sa configuration reçue, après transformation partielle ou totale le cas échéant; et
- une étape d'exécution des fonctions du dispositif mettant en oeuvre tout ou partie de l'au moins une information en rapport avec sa configuration reçue, après transformation partielle ou totale le cas échéant.

Le procédé de configuration selon l'invention vise à résoudre en premier lieu le problème technique suivant : offrir de nombreuses possibilités de choix d'options fonctionnelles, de réglages, de paramétrages d'un dispositif, sans renchérir notablement son coût, la solution selon l'invention ne devant en outre pas nécessiter de moyens supplémentaires spécifiques ni de compétences particulière pour la mise en oeuvre.

Le procédé selon l'invention offre une solution nouvelle et inventive à ce problème. La première étape concerne la préparation de la configuration, c'est-à-dire faire des choix d'options fonctionnelles, de réglages, de paramétrages de tous types dans un ensemble des possibles qui peut être circonscrit en relation avec un type donné de dispositif, une marque donnée de dispositifs, à une gamme donnée de dispositifs ou à un dispositif en particulier. Il est prévu que l'au moins une information en rapport avec la configuration du dispositif résultant de l'étape de configuration soit directement exploitable et en totalité par le dispositif dans le cas où les moyens mis en oeuvre lors de l'étape de préparation ont eu la connaissance des références exactes du dispositif à configurer. Il est aussi prévu dans d'autres variantes de mise en oeuvre que seule une partie de l'au moins une information produite à l'étape de préparation est utilisée par le dispositif et/ou que ce dernier traduit tout ou partie de l'information avant de l'utiliser. Il est prévu dans le procédé selon l'invention que l'exécution de ladite étape de préparation et/ou de ladite étape d'émission d'au moins une information en rapport avec la configuration du dispositif comprend en outre une étape d'identification dudit dispositif.

Il est prévu dans l'invention que l'étape de préparation comprenne une étape d'identification du dispositif à configurer. Cette étape est avantageusement la première au sein de l'étape de préparation, pour le cas échéant, adapter les choix et/ou les réglages proposés à ceux qui sont effectivement exploitables par le dispositif désigné. L'identification du dispositif peut se faire par tous moyens, par exemple par la sélection du dispositif dans une énumération éventuellement dans une arborescence. Il peut s'agir aussi d'une saisie de la marque et du modèle du dispositif ou encore de la saisie de la suite de chiffres du code d'identification du produit sur son emballage aux fins de la gestion des stocks, par exemple de la suite de chiffres associée à un code à barres. Tout type de dispositif d'entrée peut convenir pour mener à bien cette opération, claviers de tous types : clavier classique d'ordinateur, clavier virtuel sur écran tactile, clavier d'un téléphone ou d'une télécommande etc. Dans un mode de réalisation préféré, l'appareil utilisé est un téléphone qui propose l'interaction par synthèse et reconnaissance vocale ; si le téléphone est équipé d'un appareil photo, il est prévu d'identifier le dispositif en photographiant sur code à barres ou sa face avant sur laquelle la marque et la référence du modèle sont écrits. Des logiciels de reconnaissance d'image appropriés sont mis en oeuvre localement ou à distance ainsi qu'une base de données pour procéder automatiquement à l'étape d'identification.

Il est prévu dans le procédé selon l'invention que l'exécution de l'étape d'émission d'au moins une information en rapport avec la configuration du dispositif est conditionnée par l'exécution d'une étape préalable de demande explicite d'émission de l'au moins une information en rapport avec la configuration du dispositif.

Il est prévu que dans le cas d'une mise en oeuvre du procédé selon l'invention, dans laquelle l'étape de préparation est réalisée de manière interactive en vue d'une émission en direct vers le dispositif à configurer de l'au moins une information, que l'étape d'émission soit exécutée après que l'utilisateur ait explicitement commandé l'émission, par exemple par appui sur un bouton.

Il est prévu dans le procédé selon l'invention que l'étape d'émission de l'au moins une information en rapport avec la configuration du dispositif et l'étape de préparation de la configuration sont exécutées automatiquement en boucle et que l'au moins une information en rapport avec la configuration du dispositif est automatiquement mises à jour en conséquence.

Il est prévu que dans le cas d'une autre variante de mise en oeuvre du procédé qui est interactive pour émettre en direct vers le dispositif à configurer l'au moins une information, que l'émission soit répétée en boucle. Il est aussi prévu que l'au moins une information émise est continument mise à jour en fonction des réglages en cours. Cela revient à exécuter successivement dans une boucle sans fin les étapes de préparation et d'émission. Ceci jusqu'à ce que l'utilisateur termine la session de configuration.

Il est prévu dans le procédé selon l'invention que l'étape d'émission de l'au moins une information en rapport avec la configuration du dispositif est associée à la lecture d'une information sonore et/ou visuelle destinée à l'utilisateur.

Dans une variante de mise en oeuvre préférée, il est prévu que les capacités additionnelles de reproduction d'informations visuelles et/ou sonores des appareils mis en oeuvre pour exécuter l'étape d'émission de l'au moins une information en rapport avec la configuration sont utilisées pour apporter une information à l'utilisateur. On entend par information par exemple une description vocale des options de la configuration associée, une information guidant l'utilisateur dans l'opération de configuration et/ou d'utilisation du dispositif et/ou de l'appareil pour le configurer, une information à caractère promotionnel ou publicitaire etc. Par exemple, lorsqu'un appareil doté d'une capacité de reproduction du son stéréophonique est utilisé pour émettre au moins une information en rapport avec la configuration sur un des canaux, l'autre canal son peut être avantageusement utilisé pour délivrer une information à l'utilisateur. De même, si un canal son est utilisé dans une vidéo pour émettre l'au moins une information en rapport avec la configuration, s'il s'agit de son monophonique, les moyens de reproduction d'image peuvent être utilisés pour lire une information purement visuelle telle qu'une animation, un film, une succession d'images fixes, des textes page par page ou défilant pour apporter une information à l'utilisateur. Lorsque la bande son associée à la vidéo est stéréophonique alors un des deux canaux sonores peut être affecté à la bande son de la vidéo, l'autre canal étant destiné à l'émission de l'au moins une information en rapport avec la configuration.

Il est prévu dans le procédé selon l'invention que les conséquences sur le dispositif de l'exécution de ladite étape de préparation et/ou de ladite étape d'émission d'au moins une information en rapport avec la configuration du dispositif sont conditionnées par l'exécution d'une étape préalable d'ouverture de session de configuration exécutée dans le dispositif.

Dans une variante de mise en oeuvre plus préférée, une action ou une combinaison d'actions à très faible probabilité d'occurrence naturelle précède toute opération susceptible de modifier la configuration du dispositif. Il peut s'agir par exemple de l'appui sur un ou plusieurs boutons du dispositif, simultanément ou en séquence, de l'engagement d'une action en relation avec la mise sous tension du dispositif, de la sollicitation d'un de ses capteurs le cas échéant ou de toute combinaison de telles actions ou événements.

Il est prévu dans le procédé selon l'invention que la réception et/ou le stockage et/ou la mise en oeuvre de tout ou partie de l'au moins une information en rapport avec la configuration du dispositif reçue, après transformation partielle ou totale le cas échéant, est conditionnée par la réception d'une information caractéristique du dispositif.

Ce raffinement de l'invention sécurise le dispositif vis-à-vis d'erreurs de manipulation ou de sélection de l'utilisateur lors des étapes de préparation et/ou d'émission de l'au moins une information en rapport avec la configuration. En effet, les informations de configuration, en l'absence de standardisation sont spécifiques à un appareil donné. Une même information peut cependant être techniquement reçue par des dispositifs différents mais il est hautement probable que ladite information sera interprétée différemment par chaque dispositif. Ceci peut conduire à des résultats surprenants voir problématiques pour un dispositif recevant l'au moins une information n'ayant pas été préparée pour lui. Ainsi il est prévu que l'au moins une information en rapport avec la configuration d'un dispositif selon l'invention contienne des éléments d'identification permettant au dispositif récepteur de vérifier que l'au moins une information reçue a bien été préparée pour lui et que par conséquent il peut exploiter l'information pour modifier sa configuration. Ceci sous réserve que des contrôles d'intégrité optionnels qu'il est avantageux de mettre en oeuvre aient été passés avec succès. Si l'au moins une information en rapport avec la configuration ne satisfait pas le test d'identification du dispositif cible ou le cas échéant le contrôle d'intégrité alors l'information est rejetée sans être exploitée par le dispositif.

L'invention prévoit un système comprenant :
- Un dispositif selon le premier aspect et/ou selon le second aspect de l'invention; et
- Au moins un équipement pour produire au moins une information en rapport avec la configuration du dispositif; et
- Un équipement pour émettre au moins une information en rapport avec la configuration du dispositif, l'au moins un équipement pour produire l'au moins une information en rapport avec la configuration pouvant être confondu avec, ou distinct de, celui pour l'émettre.

Toutes les applications du dispositif selon l'invention sont bien entendu comprises dans le cadre de l'invention.

Cela étant, le dispositif selon l'invention est particulièrement pertinent dans le cadre des applications suivantes :
Application du dispositif selon l'invention pour économiser de l'énergie par la suppression de la consommation électrique en veille d'au moins un appareil, tout en offrant à un appareil d'enregistrement continument alimenté en énergie électrique la capacité d'activer et/ou de désactiver l'alimentation électrique d'au moins un autre appareil audio-visuel tel qu'un dispositif de stockage externe, un tuner etc., l'au moins un autre appareil audio-visuel pouvant en outre avoir son alimentation électrique activée et/ou de désactivée en fonction de l'état fonctionnel d'au moins un appareil pilote tel qu'un téléviseur.

Application du dispositif selon l'invention pour économiser de l'énergie par la suppression de la consommation électrique en veille d'au moins un appareil, tout en offrant à un appareil de type Set Top Box continument alimenté en énergie électrique la capacité d'activer et/ou de désactiver l'alimentation électrique d'au moins un autre appareil, l'au moins un autre appareil pouvant en outre avoir son alimentation électrique activée et/ou de désactivée en fonction de l'état fonctionnel d'au moins un appareil pilote tel qu'un téléviseur.

Application du dispositif selon l'invention pour économiser de l'énergie par la suppression de la consommation électrique en veille d'un appareil électroménager et/ou pour diminuer le risque de dégâts des eaux dont il peut être la cause, tout en offrant à l'appareil électroménager la possibilité d'un départ différé pour bénéficier d'un tarif avantageux de l'énergie électrique. Application du dispositif selon l'invention pour économiser de l'énergie par la suppression de consommations électriques inutiles d'un appareil chauffant et/ou pour diminuer le risque d'incendie dont il peut être la cause.

### Brève description des dessins

D'autres avantages et caractéristiques de l'invention apparaîtront à l'examen de la description détaillée de modes de mise en oeuvre nullement limitatifs, et des dessins annexés où,

Selon le premier aspect de l'invention :
La figure 1 illustre une première variante de mise en oeuvre de l'invention.
La figure 2 illustre une seconde variante de mise en oeuvre de l'invention.
La figure 3 illustre une troisième variante de mise en oeuvre de l'invention.
La figure 4 illustre une quatrième variante de mise en oeuvre de l'invention.
La figure 5 illustre une cinquième variante de mise en oeuvre de l'invention.
La figure 6 illustre une sixième variante de mise en oeuvre de l'invention.
La figure 7 illustre un premier circuit de puissance.
La figure 8 illustre un second circuit de puissance.
La figure 9 illustre un troisième circuit de puissance.
La figure 10 illustre un quatrième circuit de puissance.
La figure 11 illustre une mise en oeuvre sans mesure de puissance.
La figure 12 illustre le dispositif dans un premier contexte d'utilisation.
La figure 13 illustre une variante du dispositif dédié aux produits blancs.
La figure 14 illustre une fonction du dispositif pour détecter les fuites d'eau.
La figure 15 illustre la fonction de détection de fuite en présence d'eau.
La figure 16 illustre une première variante pour appareil chauffant en action.
La figure 17 illustre la première variante pour appareil chauffant au repos.
La figure 18 illustre une autre variante pour appareil chauffant.
La figure 19 illustre l'autre variante pour appareil chauffant en action.
La figure 20 illustre l'autre variante pour appareil chauffant en maintien.
La figure 21 illustre l'autre variante pour appareil chauffant sans charge.

Et selon le second aspect de l'invention :
La figure 22 illustre des moyens interactifs pour préparer la configuration.
La figure 23 illustre d'autres moyens pour préparer la configuration.
La figure 24 illustre la configuration interactive au moyen d'un ordinateur.
La figure 25 illustre la configuration par le son issu d'un ordinateur.
La figure 26 illustre la configuration par le son issu d'un téléviseur.
La figure 27 illustre la configuration au moyen d'un téléphone étape 1.
La figure 28 illustre la configuration au moyen d'un téléphone étape 2.
La figure 29 illustre la configuration au moyen d'un téléphone étape 3.
La figure 30 illustre la configuration au moyen d'un baladeur étape 1.
La figure 31 illustre la configuration au moyen d'un baladeur étape 2.
La figure 32 illustre la configuration au moyen d'un baladeur étape 3.

### Description détaillée des figures et des modes de réalisation

D'autres particularités et avantages de l'invention apparaîtront encore dans la description ci-après. Aux dessins annexés donnés à titre d'exemples non limitatifs :

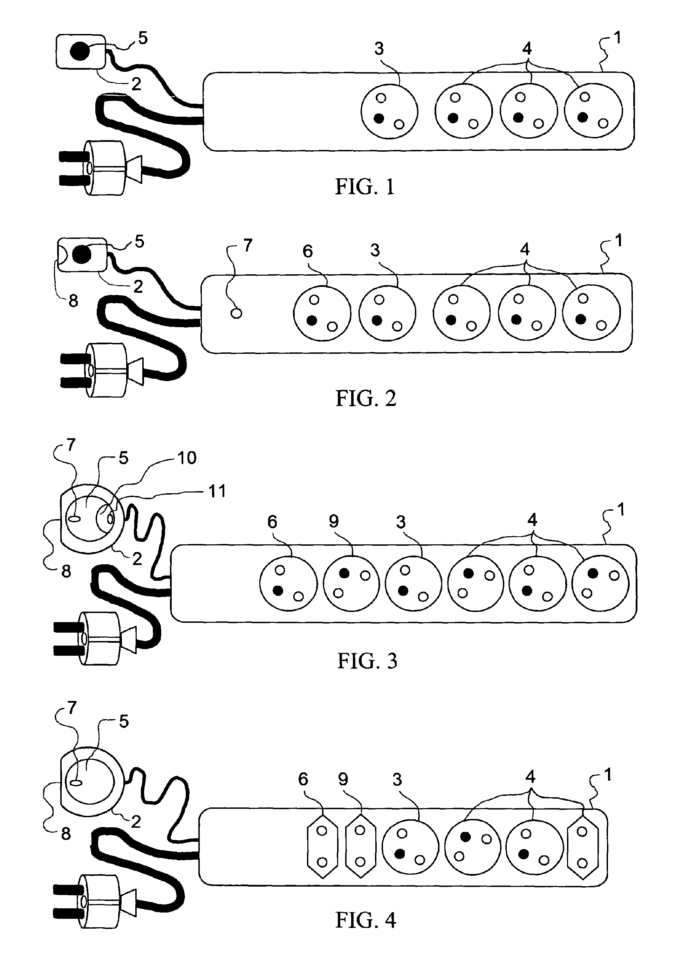

La figure 1 illustre une première variante de mise en oeuvre de l'invention dans laquelle le dispositif, présenté sous une forme à deux sous-ensembles (1, 2), n'a aucune ressource matérielle dédiée à l'au moins un mode de fonctionnement en dérogation. Cette variante simple de mise en oeuvre du dispositif offre l'avantage d'utiliser des moyens matériels similaires à ceux mis en oeuvre dans les coupe-veilles à l'état de l'art, la mise en oeuvre de l'invention se faisant par remplacement des moyens logiques déterminant un comportement à l'état de l'art par des moyens logiques, réalisés en logique câblée ou programmée, déterminant un comportement selon l'invention. Ce matériel peut être du type qui coupe l'alimentation de l'appareil pilote principal connecté à la prise 3, en plus de couper l'alimentation des accessoires qu'il est prévu d'alimenter par une pluralité de prises dédiées 4.

Le dispositif peut être aussi du type dit maitre-esclave dans lequel l'appareil pilote principal reste alimenté en permanence par la prise 3. Le bouton 5 qui est présenté comme faisant partie d'une commande déportée 2 par des moyens filaires dans cet exemple est le moyen prévu pour faire entrer le dispositif dans l'au moins un mode de fonctionnement en dérogation. Dans cet exemple de mise en oeuvre, une économie de moyens est réalisée en utilisant le même bouton 5 pour mettre en marche le dispositif en mode normal ou en mode dérogation. La mise en marche normale se fait en effectuant un seul appui sur le bouton 5 et le mode de mise en marche en dérogation selon l'invention se fait par deux appuis successifs dans un laps de temps déterminé sur ce même bouton 5. Il est prévu que la sortie du mode de fonctionnement en dérogation se fasse par un nouvel appui sur le bouton 5 et/ou de manière automatique lorsque le dispositif est informé que l'au moins un appareil pilote principal branché sur la prise 3 est en marche. Dans cette exemple de mise en oeuvre de l'invention, l'information du dispositif repose sur des moyens de mesure donnant une information représentative de la puissance consommée par l'au moins un appareil pilote principal et des moyens pour déterminer l'état fonctionnel de l'au moins un appareil pilote principal, par comparaison entre ladite information et au moins un premier seuil préalablement déterminé. Le dispositif est ainsi informé que l'au moins un appareil pilote principal branché sur la prise 3 est en marche lorsque sa consommation de puissance est supérieure ou égale à un premier seuil préalablement déterminé.

La figure 2 illustre une seconde variante de mise en oeuvre de l'invention qui diffère de celle de la figure 1 par ajout, dans la partie 1 du dispositif comprenant les connecteurs, d'une prise 6 alimentée en permanence pour y raccorder des appareils dont l'alimentation ne peut pas être interrompue, d'un voyant 7 et un capteur de signaux de télécommande infrarouge 8.

Dans une variante où la télécommande externe serait dédiée au dispositif alors le bouton 5 pourrait être proposé à l'utilisateur sur le boitier de commande déporté 2 et/ou sur la télécommande spécifique associée au dispositif. Dans le cas avantageux ou n'importe quelle télécommande associée à un équipement tiers peut être utilisée après apprentissage de tout ou partie des signaux ou sans apprentissage alors au moins un bouton 5 compris dans un sous ensemble du dispositif (1 ou 2) est le moyen le plus simple de permettre l'entrée et/ou la sortie de l'au moins un mode de fonctionnement en dérogation. Le voyant 7 permet en outre avantageusement de signaler à l'utilisateur que le dispositif 1 est dans un mode de fonctionnement en dérogation. Dans certaines variantes de mise en oeuvre, ce voyant peut être déporté ou dupliqué dans la commande déportée 2 pour une visualisation plus aisée. Il peut être en effet perturbant pour l'utilisateur de n'avoir aucun moyen pour différentier le mode normal et un mode de fonctionnement en dérogation en ce que ces deux modes peuvent conduire à des comportements du dispositif obéissant à une logique opposée pouvant éveiller des craintes de dysfonctionnement.

La figure 3 illustre une troisième variante de mise en oeuvre de l'invention qui diffère de celle de la figure 2 par l'ajout d'une prise 9 alimentée en permanence et qui est associée à un circuit de mesure interne et de traitement associé permettant de déterminer en tout ou partie l'état du dispositif en fonction de la puissance consommée par un ou plusieurs appareils formant l'appareil pilote secondaire connecté sur la prise 9. Dans cet exemple, un bouton supplémentaire 10 est dédié à l'au moins un mode de fonctionnement en dérogation, le bouton 5 étant affecté exclusivement à la mise en marche en mode normal. Un voyant 7 placé en visibilité sur la commande déportée 2 permet de visualiser les différents états de fonctionnement du dispositif en mode normal. Un voyant 11 permet de visualiser les différents états de fonctionnement du dispositif en mode dérogation. Un récepteur de signaux infrarouges 8 permet en outre au dispositif d'être mis en marche à distance au moyen d'une télécommande. Compte tenu du caractère par nature exceptionnel du mode de fonctionnement en dérogation, il est prévu de réserver la commande de l'entrée et/ou de la sortie de ce mode de mise en marche du dispositif à des actions de l'utilisateur sur au moins un bouton (5, 10) de la commande déportée 2, réservant l'usage d'une éventuelle télécommande à la mise en marche normale du dispositif. La sortie du mode de fonctionnement en dérogation peut se faire par exemple par un nouvel appui sur le bouton dédié 10 voir aussi par un appui sur le bouton principal 5 ou encore de manière automatique comme décrit dans le cadre de la figure 1. Il est prévu que la gestion de l'entrée et de la sortie du mode fonctionnement en dérogation soit entièrement automatique en fonction de l'état de l'au moins un appareil pilote secondaire branché sur la prise 9. Dans la variante la plus universelle de la figure 3, aux possibilités fonctionnelles multiples, il est prévu des moyens pour configurer le dispositif pour adapter tout ou partie des options fonctionnelles aux souhaits de l'utilisateur et/ou au contraintes de son installation. Avantageusement il est prévu que les prises soient associées à des couleurs et/ou à des marquages par pictogrammes et/ou par textes pour différencier aisément leur usage. Par exemple une ou plusieurs prises vertes 3 sont dédiées au raccordement d'un ou de plusieurs appareils formant l'appareil pilote principal, une ou plusieurs prises noires ou grises 4 sont dédiées au raccordement des appareils accessoires, une ou plusieurs prises oranges 9 sont dédiées au raccordement d'un ou de plusieurs appareils formant l'appareil pilote secondaire, éventuellement une ou plusieurs prises rouges 6 sont dédiées au raccordement d'appareils connectés en permanence au réseau électrique.

La figure 4 illustre une quatrième variante de mise en oeuvre de l'invention. Il s'agit d'une variante du dispositif illustré par la figure 3, proposant globalement les mêmes fonctionnalités mais mises en oeuvre à un coût plus faible. Cette variante diffère dans celle qu'illustre la figure 3 par le retrait du bouton de commande spécifique de l'au moins un mode en dérogation, les commandes correspondantes étant au moins en partie assurées par une utilisation duale du bouton unique 5. Le choix du mode de fonctionnement pour la mise en marche étant le même que décrit dans le cadre de la figure 1. La figure 4 illustre en outre un agencement différent des prises (3, 4, 6, 9) par exemple en choisissant des prises sans fiche de terre pour certaines d'entre elle, celles qui sont le plus probablement associées à des appareils de faible puissance sans connexion à la terre. Un voyant commun 7 placé en visibilité sur la commande déportée 2 permet de visualiser les différents états de fonctionnement du dispositif à la fois en mode normal et en mode dérogation. Le mode de fonctionnement en cours, normal ou dérogation étant différencié par des rythmes de clignotement et/ou des couleurs dédiés à chaque mode de fonctionnement.

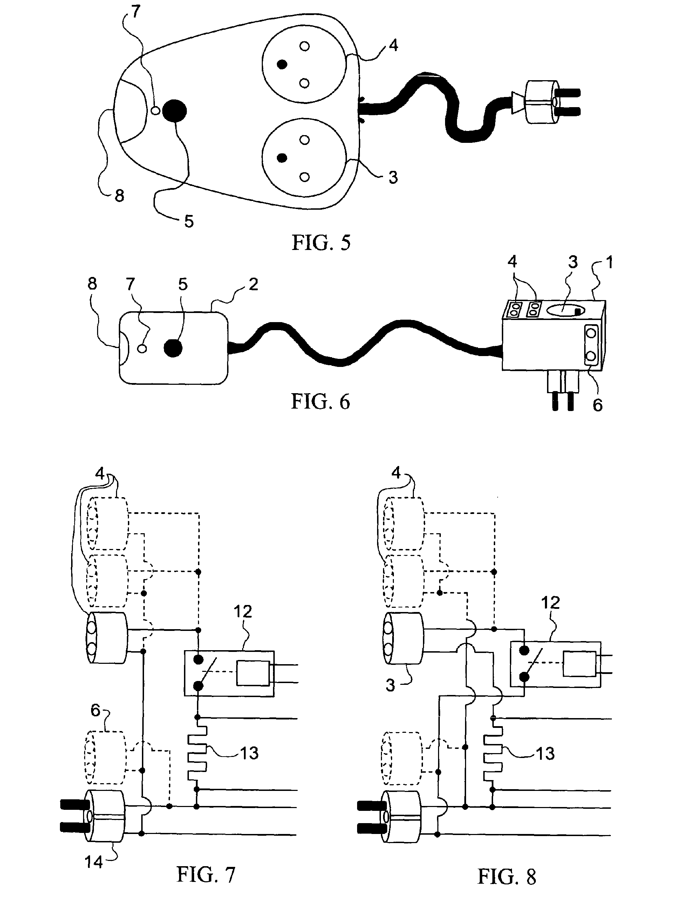

La figure 5 illustre une cinquième variante de mise en oeuvre de l'invention qui se différentie des précédentes par une approche monobloc à faible coût du dispositif. On y retrouve l'essentiel des moyens présentés dans les variantes précédentes, un bouton 5, un voyant 7 et un capteur pour signaux de télécommandes infrarouges, sous une forme qui privilégie la compacité.

On retrouve par exemple la prise 3 dédiée à l'au moins un appareil pilote principal et la prise 4 dédiées aux accessoires. Chacune de ces prises pouvant être répliquées par des prises multiples externes.

La figure 6 illustre une sixième variante de mise en oeuvre de l'invention présentée sous une forme à deux sous-ensembles (1, 2) comprenant des ressources agencées autrement que dans les variantes précédentes. Dans cet exemple, toute l'électronique est comprise dans la commande déportée 2 ainsi que le bouton 5, le voyant 7 et le capteur infrarouge 8. Le bloc 1 ne comprend que des prises et leur câblage interne. Il est prévu que le bloc 1, tout en étant particulièrement compact et réalisé à faible coût, comprenne néanmoins des prises spécifiques 3, 4 et 6 respectivement pour l'au moins un appareil pilote principal, pour des accessoires et pour un appareil devant être alimenté continument, comme dans les versions décrites précédemment. Cet agencement des prises a pour but d'optimiser l'encombrement et le coût du sous-ensemble 1 du dispositif pour réduire la part du dispositif qui est impactée par les changements de standards de prises en fonction des pays où le dispositif est utilisé. Le sous-ensemble 2, qui rassemble la plus grosse partie des coûts et de la complexité est identique pour tous les pays et peut donc être produit en bénéficiant d'économies d'échelle substantiels. Il est prévu dans une variante non représentée que le bloc 1 ne comprenne qu'une fiche mâle pour le raccordement au réseau électrique et qu'une seule prise femelle pour raccorder l'au moins un appareil. Le dispositif complété est le cas échéant par une prise multiple externe pour permettre le raccordement d'une pluralité d'appareils. Des moyens appropriés à cette configuration, incorporant ou non des moyens de mesure de puissance tels que déjà décrits permet la mise en oeuvre de l'au moins un mode de fonctionnement en dérogation.

La figure 7 illustre une première variante de circuit de puissance compris dans le dispositif. Il s'agit d'une variante prévue pour couper l'ensemble des charges au moyen d'un dispositif de commutation 12 tel qu'un relais électromécanique. Le circuit de puissance comprend des moyens tels qu'une résistance de puissance 13 ayant une faible valeur ohmique pour mesurer le courant circulant dans l'au moins un appareil et ainsi obtenir une grandeur représentative de la puissance consommée. Les appareils étant connectés indifféremment sur une ou plusieurs prises 4. Le dispositif est agencé pour reconnaitre l'état fonctionnel de l'au moins un appareil pilote au moyen d'un seuil déterminé pour que la somme des puissances de l'au moins un appareil pilote principal en veille et celle des accessoires en marche lui soit inférieur.

Le dispositif peut arriver au même résultat en assurant un suivi dynamique de la puissance consommée par l'ensemble des charges pour détecter la mise en veille de l'au moins un appareil pilote par la mesure d'une diminution soudaine d'une valeur préalablement déterminée relativement à la mesure courante par exemple en pourcentage de la mesure. Dans une variante préférée, cette valeur peut aussi avoir été calculée par différence entre la consommation en marche et en veille de l'au moins un appareil pilote principal puis mémorisée par le dispositif au cours d'une étape préalable d'apprentissage. Le circuit de puissance comprend en outre une fiche 14 de raccordement au réseau électrique et le cas échéant une prise 6 câblée en parallèle sur la fiche 14 pour alimenter continument des appareils dont l'alimentation ne peut être interrompue.

La figure 8 illustre une seconde variante de circuit de puissance compris dans le dispositif. Dans cette variante particulièrement préférée, on retrouve les mêmes ressources que dans le circuit de la figure 7 comme le relais 12 pour couper l'alimentation de l'ensemble des charges mais ces ressources sont agencées dans cet exemple pour séparer l'alimentation 3 de l'au moins un appareil pilote de celle 4 des autres appareils. Ainsi la résistance de puissance 13 permet au dispositif de mesurer la puissance consommée exclusivement par l'au moins un appareil pilote. Ainsi le dispositif peut déterminer de manière certaine l'état fonctionnel de l'au moins un appareil pilote et est apte à assurer un fonctionnement sûr, même dans le cas où la puissance consommée par les accessoires est supérieure à celle consommée par l'au moins un appareil pilote.

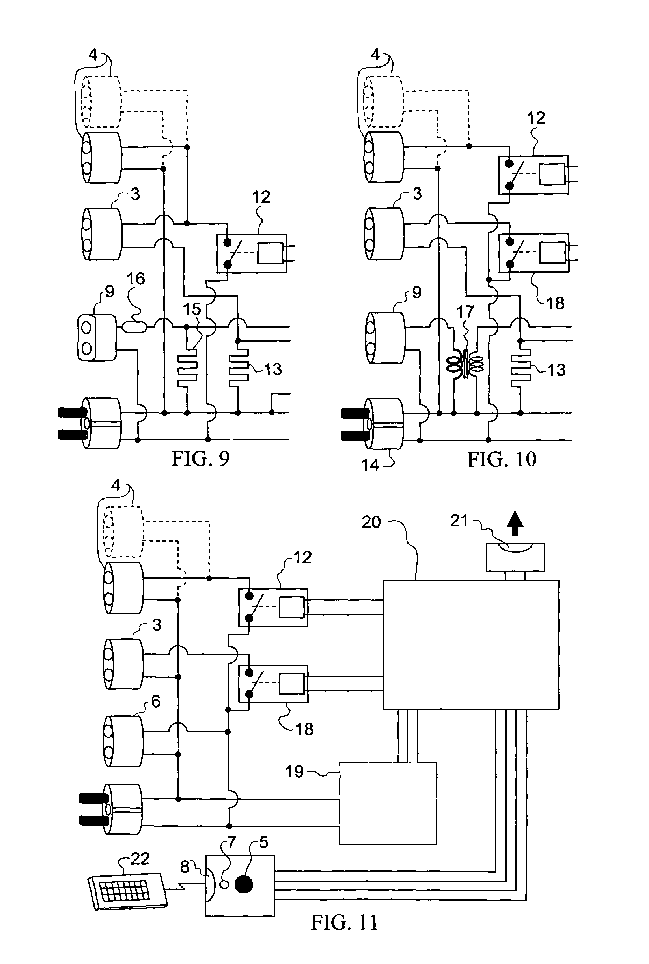

La figure 9 illustre une troisième variante de circuit de puissance. Cette variante a pour base le circuit de la figure 8 qui comprend en outre une prise 9 spécifiquement dédiée à la mise en ouvre de l'invention. Cette prise alimentée continument est associée à des moyens de mesure de la puissance consommée par l'au moins un appareil pilote secondaire au sens de l'invention. Dans le cas d'une mesure de courant réalisée par l'intermédiaire d'une résistance de puissance 15, Il est prévu un fusible ou un disjoncteur 16 en série avec la résistance pour protéger le circuit des conséquences d'un appel de courant excessif. Pour les charges dont l'alimentation peut être coupée par le relais 12 il est avantageux de protéger le circuit contre les surcharges par une déconnection automatique lorsque la puissance dépasse une valeur préalablement déterminée. Il est prévu que les fonctionnalités associées à la prise alimentée continument sont définies par une configuration appropriée. Ainsi la prise 9 peut être utilisée pour brancher l'au moins un appreil pilote secondaire ou pour brancher un appareil à alimenter continument n'ayant aucune influence sur le fonctionnement du dispositif.

Selon la configuration choisie, le dispositif peut met en oeuvre un mode de fonctionnement en dérogation selon l'invention à partir de l'état fonctionnel de l'au moins un appareil pilote secondaire ou un autre mode de fonctionnement en dérogation.

La figure 10 illustre une quatrième variante de circuit de puissance qui diffère de celui de la figure 9 en ce que le circuit de la prise 9 alimentée en permanence fait appel à des moyens pour la mesure du courant qui sont tolérants aux surcharges tel qu'un transformateur de courant 17 dont le primaire peut supporter le courant maximum autorisé par les prises (3, 4, 9) la fiche 14 et les câbles du dispositif. La protection contre les surcharges est alors assurée à l'extérieur du dispositif par les moyens de protection de l'installation électrique. Dans l'exemple illustré par cette figure est également mis en oeuvre un second moyen de commutation tel qu'un relais 18 pour piloter de manière séparée l'alimentation de l'au moins un appareil pilote principal et celle des accessoires dans des modes de fonctionnement en dérogation particulièrement raffinés dans lesquels seuls les appareils utiles dans un contexte fonctionnel donné sont alimentés pour maximiser les économies d'énergie.

La figure 11 illustre une mise en oeuvre de l'invention dans un dispositif ne comprenant pas de mesure de puissance. Cette variante de mise en oeuvre est intéressante en ce qu'elle est à priori peu coûteuse à mettre en oeuvre et que des moyens simples permettent de satisfaire les exigences de sécurité électrique car la partie active de l'électronique n'est pas nécessairement au potentiel du secteur comme la plupart des variantes comprenant des moyens de mesure. Un circuit d'alimentation 19 délivre par exemple deux tensions continue telles que 24V pour alimenter le ou les relais (12, 18) et 5V pour alimenter les circuits électroniques (8, 20, 21). Le circuit d'alimentation assurant en outre avantageusement une isolation galvanique entre le réseau électrique et les circuits électroniques (8, 20, 21). Bien qu'un ou plusieurs boutons ne soient pas indispensable à la mise en oeuvre de l'au moins un mode de fonctionnement en dérogation selon l'invention, la présence d'au moins un bouton 5 sur le dispositif est avantageux en ce qu'il permet de mettre en marche les appareils en cas d'indisponibilité d'une télécommande appropriée 22. Au moins un voyant 7 est prévu pour signaler de manière différentiée que le dispositif est dans un mode de fonctionnement en dérogation. La présence des moyens de commutation séparés (12, 18) pour l'au moins un appareil pilote principal et pour les accessoires introduits dans l'exemple de la figure 10, celle de la prise alimentée continument 6, illustre le fait que tous les raffinements de l'invention peuvent être mis en oeuvre sans aucun moyen pour mesurer la puissance. Cela étant on ne sort pas du cadre de l'invention dans le cas d'une mise en oeuvre minimaliste ne comprenant par exemple qu'un seul moyen de commutation.

L'ajout de moyens optionnel 21 pour émettre des commandes infrarouges vers des appareils ainsi que plus d'un moyen de commutation permet la mise en oeuvre de nombreux raffinements fonctionnels impliquant au moins un mode de fonctionnement en dérogation selon l'invention.

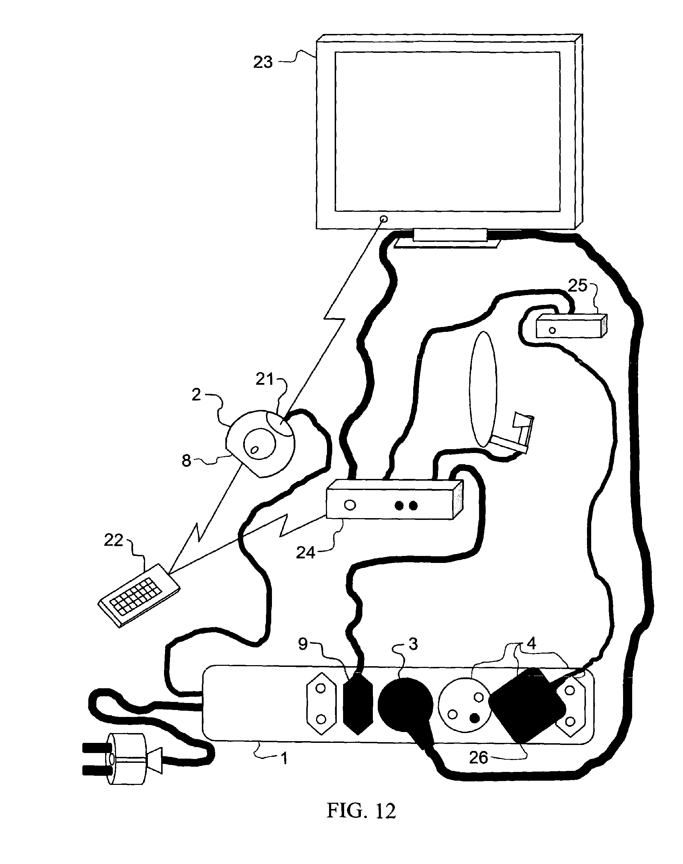

La figure 12 illustre le dispositif dans un premier contexte d'utilisation.

Dans cet exemple de mise en oeuvre de l'invention, il s'agit d'un groupe fonctionnel du pôle audiovisuel comprenant le téléviseur 23 jouant le rôle d'appareil pilote principal, un boîtier de type « Set Top Box » 24 pour recevoir des programmes de télévision cryptés diffusés par satellite ou par tout autre moyen, la télécommande 22 associée au boitier, un disque dur externe 25 pour stocker des contenus audiovisuels et son alimentation 26. Le dispositif selon l'invention est mis en oeuvre dans cet exemple sous la forme d'un bloc principal 1 et d'une commande déportée 2. Le bloc principal 1 comprend, entre autres ressources, une prise 9 pour un appareil pilote secondaire, une prise 3 pour un appareil pilote principal et des prises 4 pour alimenter des accessoires. La commande déportée 2 comprend, entre autres ressources, un récepteur 8 et un émetteur 21 de signaux infrarouges. Le boîtier 24 est doté en outre de moyens pour enregistrer des contenus numériques à la demande de l'utilisateur et/ou dans le cadre des méthodes de diffusion de l'opérateur. Lesdits moyens pour enregistrer utilisent le disque dur externe 25 pour stocker les contenus numériques. La mise en oeuvre de l'invention permet d'alimenter continument le boitier 24 qui dans les versions les plus élaborées dispose de son propre mode de fonctionnement en veille et qui est capable de passer en marche lorsqu'un ou plusieurs événements maîtrisés par l'opérateur surviennent. Dans ce contexte représentatif de mise en oeuvre de l'invention dans le cadre d'équipement audiovisuels courants, le mode de fonctionnement en dérogation du dispositif consiste à alimenter un ou plusieurs autres appareils tel que des moyens de stockage externes de contenus numériques lorsque qu'un appareil pilote secondaire, dans cet exemple le boîtier 24, est dans un état fonctionnel de marche bien que l'appareil pilote principal, dans cet exemple le téléviseur 23, est à l'arrêt. L'au moins un autre appareil étant aussi alimenté lorsque l'appareil pilote principal est dans un état fonctionnel de marche et l'alimentation de l'au moins un autre appareil 25 est coupée lorsque les appareils pilotes principal 23 et secondaire 24 sont dans un état fonctionnel de veille ou d'arrêt. Il est prévu dans une variante de mise en oeuvre particulièrement optimisée de l'invention que l'au moins un des autres appareils connectés dont il s'agit de commander l'alimentation électrique ne comprenne que l'au moins un appareil accessoire à l'exclusion de l'au moins un appareil pilote principal. Ce raffinement permet de faire en sorte que l'appareil pilote secondaire 24 puisse commander l'alimentation d'appareils d'intérêt comme des récepteurs ou des décodeurs qui sont des sources potentielles de programmes ou encore des moyens de stockages externe 25 sans affecter l'alimentation de l'appareil pilote principal 23 qui lorsqu'il s'agit d'un téléviseur ou d'un vidéo projecteur qui peut rester avantageusement à l'arrêt. Un autre raffinement prévu repose sur la présence d'un émetteur infrarouge 21 dans les variantes les plus élaborées du dispositif. Cet émetteur configurable par apprentissage des codes envoyés par une autre télécommande reçus par le capteur 8 et mémorisés dans le dispositif ou configurable par désignation explicite d'au moins un appareil à commander dont les codes correspondants sont extraits d'une base de données. Le dispositif assure le cas échéant le transcodage de commandes émises par la télécommande principale 22 et reçues par le capteur 8 puis l'émission par l'émetteur infrarouge 21 ou par tout autre moyen fonctionnellement équivalent tel que des émetteurs infrarouges ponctuels à coller par de l'adhésif double face près du capteur des appareils concernés. Ainsi une seule télécommande est nécessaire pour piloter plusieurs appareils et la commande de la mise en marche du boîtier 24 qui est la source principale de programmes provoque l'alimentation du téléviseur puis sa mise en marche par l'envoi d'au moins une commande infrarouge appropriée par l'émetteur 21. Le même résultat fonctionnel peut être obtenu sans émetteur infrarouge dans le dispositif si la liaison entre le boîtier 24 et le téléviseur comprend une transmission de commandes compatibles entre les appareils comme c'est le cas avec par exemple avec les liaisons HDMI dans leur mise en oeuvre les plus avancées.

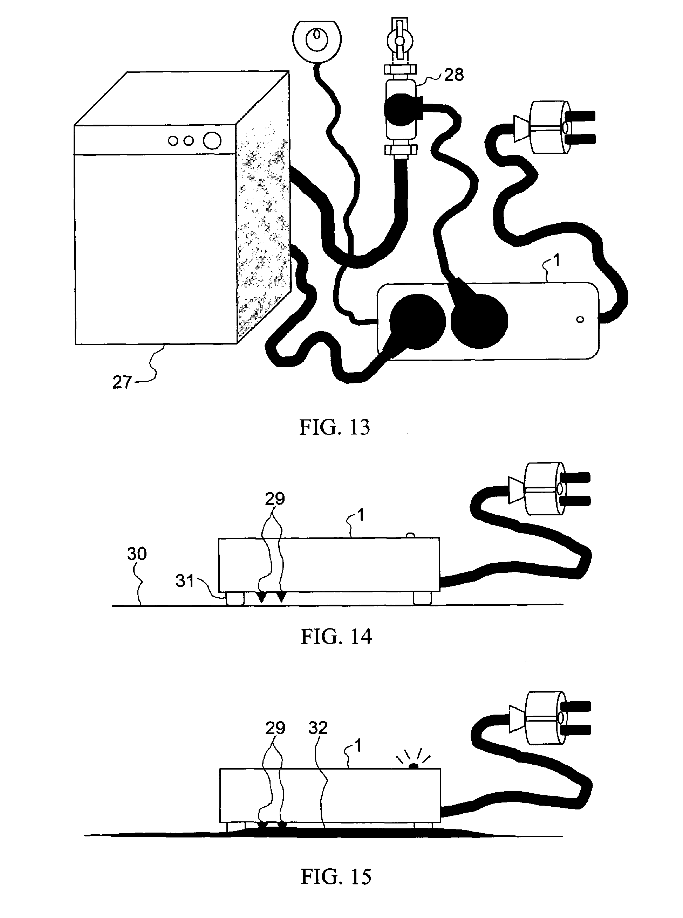

La figure 13 illustre une variante du dispositif dédié aux produits blancs.

Cette figure illustre une mise en oeuvre de l'invention dédiée aux gros appareils électroménagers. L'optimisation du dispositif 1 selon l'invention pour cette catégorie d'appareil est avantageuse car il s'agit d'appareils caractérisés par une possible forte consommation de puissance, par pas ou peu d'accessoires et par la présence fréquente d'un raccordement à un réseau d'alimentation en eau. Il s'agit par exemple d'un lave-vaisselle, d'un lave-linge ou d'un sèche-linge. Ainsi un dispositif adapté à ces appareils comprendra des moyens pour commuter la puissance maximale en rapport avec les prises et les câbles standards utilisés par les appareils. Bien qu'une seule prise pour l'alimentation pilotée de l'appareil électroménager 27 qui joue le rôle d'appareil pilote principal sans accessoire indispensable, la présence d'une seconde prise est avantageuse pour connecter une électrovanne de sécurité 28 le cas échéant. L'accessoire optionnel qu'est une électrovanne de sécurité peut être connecté à une prise commandée du dispositif 1 qui n'est pas connectée au circuit de mesure de courant, par exemple une prise 4 d'un circuit de puissance de la figure 8. Cela étant, compte tenu de la puissance négligeable consommée par l'électrovanne par rapport à celle des ressources internes de l'appareil telles qu'un moteur ou une résistance chauffante, il est possible de simplifier le dispositif en câblant en parallèle toutes les charges dans un circuit de mesure de courant tel que celui de la figure 7. Compte tenu des puissances importantes consommées par les appareils électroménagers et bien que la solution de la mesure de courant par une résistance de puissance 13 des figures 7 ou 8 soit possible moyennant l'utilisation d'un shunt dimensionné pour ces puissances, l'utilisation d'un transformateur de courant dans le circuit de puissance est particulièrement appropriée en tant que moyen pour mesurer le courant consommé par l'au moins un appareil pilote principal. Les fonctionnements en dérogation du dispositif selon l'invention qui sont adaptés à ce cas d'usage sont par exemple la mise en marche tolérante par rapport à un départ différé du cycle de l'appareil. On entend généralement par départ différé pour ce type d'appareils, la possibilité de programmer sur l'appareil lui-même, un démarrage du cycle au bout d'un temps déterminé. Un autre type de départ différé du cycle repose sur la détection d'une condition externe telle qu'un passage à un tarif économique de l'énergie électrique par l'appareil. Ainsi la mise en oeuvre de l'invention conduit à alimenter continument l'au moins un appareil bien que ce dernier soit dans un état fonctionnel de veille pendant lequel il attend l'arrivée à échéance d'une temporisation ou le passage à un tarif économique de l'électricité. Lorsque l'appareil électroménager passe à un état fonctionnel de marche, alors le dispositif sort automatiquement du mode de fonctionnement en dérogation pour se comporter en coupe-veille classique c'est-à-dire qu'il maintient l'alimentation de l'au moins un appareil tant que la puissance consommée n'est pas continument inférieure à un seuil préalablement déterminé pendant un temps préalablement déterminé.

Le dispositif comprend avantageusement un autre mode de fonctionnement en dérogation qui repose sur la détection d'un événement sans rapport direct avec l'état fonctionnel de l'au moins un appareil pilote principal. Il s'agit par exemple de déconnecter automatiquement un appareil électroménager lorsqu'une fuite d'eau est détectée bien que l'au moins un appareil pilote principal soit en marche. Dans cet exemple, l'au moins un appareil dont il s'agit de couper l'alimentation comprend au moins l'appareil principal 27 qui contient généralement au moins une électrovanne et une pompe de vidange dont l'arrêt de l'alimentation est susceptible de supprimer l'effet de la fuite d'eau. Une électrovanne supplémentaire 28 montée sur le robinet d'arrivée d'eau par des moyens métalliques rigides à la sortie de laquelle l'arrivée d'eau de l'appareil électroménager est raccordée complète avantageusement l'installation en tant qu'appareil pour renforcer la sécurité de l'installation. Bien entendu, dans le cas d'appareils électroménagers pouvant être raccordés à une entrée d'eau chaude, une seconde électrovanne peut être avantageusement ajoutée ou encore, l'électrovanne à simple circuit hydraulique peut être remplacée par une électrovanne à double circuit capable de couper les alimentations d'eau froide et chaude avec les mêmes moyens électriques.

La figure 14 illustre une fonction du dispositif pour détecter les fuites d'eau.

Il est prévu une version du dispositif particulièrement préférée dans le cas des appareils électroménagers. Cette version telle que décrite précédemment comprend en outre une sonde, à poser sur le sol au pied de l'appareil électroménager, qui est apte à détecter une fuite d'eau. Il est prévu que la sonde est réalisée sous une forme déportée qui est reliée de manière permanente ou amovible au dispositif par tous moyens filaires ou non filaires. Il est aussi prévu que la sonde soit agencée dans la face inférieure du boitier du dispositif 1 pour être opérationnelle lorsque le dispositif est posé sur le sol comme illustré par la figure 14. Une ou deux électrodes 29 sont placées légèrement en retrait de la surface du sol 30 par des points d'appuis 31 prévus à cet effet. Lorsque le sol est sec, la ou les électrodes sont isolées du sol et/ou l'une par rapport à l'autre. Bien entendu d'autres moyens faisant par exemple appel à l'optoélectronique peuvent aussi être utilisés pour détecter la présence d'eau sur le sol.

La figure 15 illustre la fonction de détection de fuite en présence d'eau.

La détection de la présence d'eau sur le sol peut se faire par exemple par la circulation d'un courant entre deux électrodes 29 ou entre une électrode et la terre. Cette figure montre comment un film d'eau 32 d'une certaine épaisseur atteint les électrodes et provoque la détection de l'évènement qui conduit le dispositif 1 à déconnecter l'alimentation de l'appareil électroménager et le cas échéant d'une électrovanne de sécurité bien que l'appareil soit dans un état fonctionnel de marche

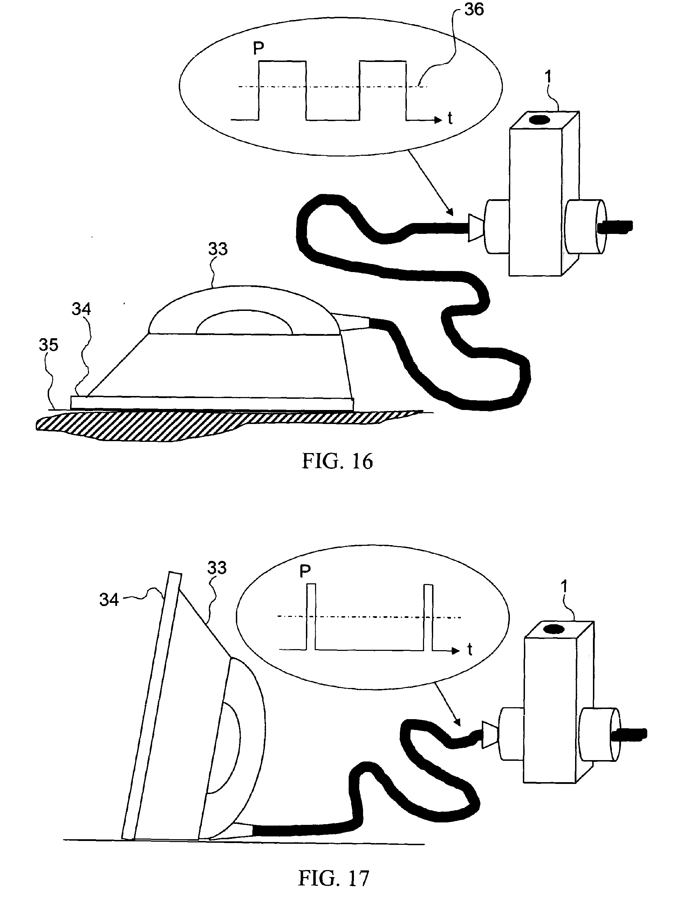

La figure 16 illustre une première variante pour appareil chauffant en action. Il s'agit d'une mise en oeuvre de l'invention destinée à des appareils électriques chauffants tels qu'un fer à repasser 33. L'invention dans ce contexte vise essentiellement la réduction du risque d'incendie en cas d'oubli de l'appareil en marche. Les appareils de cette catégorie sont caractérisés par un état de marche permanent dès qu'ils sont raccordés au réseau électrique. Ils comprennent généralement un thermostat électromécanique ou électronique qui pilote une résistance chauffante en tout ou rien. Il en résulte la consommation d'un courant qui alterne entre une valeur nulle ou très faible et la puissance nominale de la résistance chauffante. La fréquence et le rapport cyclique de la courbe de puissance de l'appareil en fonction du temps dépend de la puissance de chauffe à fournir qui dépend du réglage de la température de consigne et de l'utilisation du fer. Ce type d'appareil ne peut être convenablement géré par un coupe veille à l'état de l'art en ce qu'il ne peut pas déterminer de manière certaine pour tout réglage de la température de consigne, le type de marche dans lequel se trouve l'appareil. Dans cette application de l'invention, la valeur du seuil de puissance préalablement déterminée à laquelle la puissance mesurée est comparée n'est pas critique car pour assurer sa fonction, l'appareil ne peut avoir une puissance inférieure à 600W, en outre la puissance consommée par un thermostat électronique lorsqu'il n'alimente pas résistance chauffante est faible. Ainsi il est prévu de fixer par construction n'importe quelle valeur comprise par exemple entre 10W et 100W en tant que valeur de seuil prédéterminée. Cette valeur peut aussi être configurée ou faire l'objet d'un réglage ou d'un apprentissage. La figure 16 illustre la position en action de l'appareil. La semelle chauffante 34 est en contact avec des matériaux 35 tels que le tissu à repasser et le support de repassage qui absorbent de la chaleur. L'absorption de chaleur et donc d'énergie électrique est encore accrue dans le cas d'un fer produisant de la vapeur. Dans cette situation, une quantité significative d'énergie est nécessaire pour maintenir le fer à sa température de consigne. La courbe de puissance représentée illustre la durée longue au cours de laquelle la résistance chauffante est alimentée par le thermostat de l'appareil ainsi que la relativement grande fréquence de ces temps de chauffe. La ligne horizontale en traits mixtes 36 représente le seuil préalablement déterminé qui est comparé à la puissance consommée par l'appareil au sein du dispositif 1 pour lui permettre de démarrer et d'arrêter le comptage du temps de chauffe. Dans cet exemple qui correspond à l'appareil en action, le dispositif relance une temporisation de déconnection automatique qui a une durée préalablement déterminée à chaque fois que le temps de chauffe dépasse une valeur préalablement déterminée. L'alimentation de l'appareil est maintenue tant que la temporisation de déconnexion automatique n'arrive pas à son échéance. Dans certaine variantes plus sophistiquées il est prévu de compter aussi le temps pendant lequel la résistance n'est pas alimentée pour calculer, avec le temps de chauffe, une grandeur représentative du rapport cyclique qui est comparé à une valeur préalablement déterminée de même nature pour la relance de la temporisation de déconnexion.

Il est prévu une autre variante de dispositif selon l'invention apte à renforcer la sécurité dans l'utilisation d'un fer à repasser. Le dispositif se compose d'un boîtier principal 1 et d'une partie déportée 2 qui est solidaire du fer à repasser. La partie déportée est connectée au boîtier principal par des moyens filaires ou des moyens sans fils. La partie déportée comprend un capteur de mouvement tel qu'une bille établissant un contact entre deux électrodes dans une certaine position, un composant MEMS ou tout autre moyen équivalent, la partie déportée comprend avantageusement le bouton de mise en marche pour améliorer son accessibilité. Dans le cas de l'utilisation de moyens sans fils, la partie déportée comprend en outre un petit émetteur radiofréquence à courte portée et sa source d'alimentation qui peut être une pile ou avantageusement un générateur électrocinétique qui est avantageusement complété par un super-condensateur. Le boitier principal comprend en outre un récepteur approprié pour recevoir les signaux émis lorsque la partie déportée est en mouvement. Dans le cas de cette variante, le fonctionnement en dérogation selon l'invention repose sur la déconnexion de l'appareil du réseau électrique par le dispositif par absence de détection de mouvements pendant un temps préalablement déterminé bien que l'appareil pilote soit dans un état fonctionnel de marche. Dans le cas de l'appareil en action correspondant à la figure 16, la connexion du fer à repasser au réseau électrique est maintenue tant que des mouvements de la partie déportée font que la temporisation de déconnexion n'arrive pas à échéance.

Avantageusement, quelle que soit la variante de mise en oeuvre, une alerte sonore signale la déconnexion prochaine de l'appareil avant l'arrivée à échéance de la temporisation de déconnexion pour que l'utilisateur informé de l'imminence de la déconnexion agisse pour induire la relance de la temporisation s'il souhaite continuer à utiliser l'appareil.

La figure 17 illustre la première variante pour appareil chauffant au repos.

La semelle chauffante 34 n'est plus en contact avec des matériaux susceptibles d'absorber de la chaleur. Dans cette situation, peu d'énergie est nécessaire pour maintenir le fer 33 à sa température de consigne. Le temps de chauffe est court et le temps pendant lequel la résistance n'est pas alimentée est long. La temporisation de déconnexion automatique qui n'est pas relancée arrive à son échéance et conduit le dispositif 1 à déconnecter l'appareil.

Dans le cas d'une mise en oeuvre de l'invention selon la seconde variante décrite dans l'exposé de la figure 16, l'absence de mouvement de ladite partie déportée laisse la temporisation de déconnexion automatique arriver à échéance ce qui assure une déconnexion définitive. Lorsque le dispositif a déconnecté l'appareil, toute nouvelle connexion de l'appareil nécessite une action volontaire sur le bouton de mise en marche du dispositif.

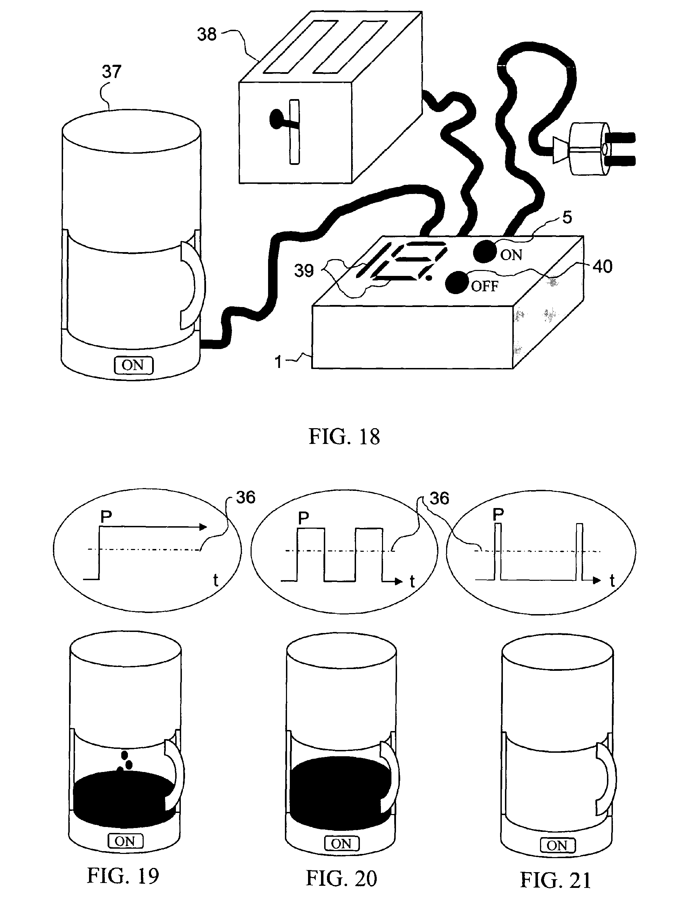

La figure 18 illustre une autre variante pour appareil chauffant.

Cet exemple illustre la mise en oeuvre de l'invention dans le cadre d'un dispositif pour déconnecter automatiquement des petits appareils électroménager tels qu'une cafetière 37, un grille-pain 38. Dans cet exemple, l'appareil pilote est la cafetière 37 qui à le cycle de fonctionnement le plus long. Cette variante préférée du dispositif dans ce contexte comprend, outre de bouton de mise en marche 5, un décompteur de temps 39 qui permet une mise en marche différée. Il est prévu dans d'autres variantes que la mise en marche différée repose sur une horloge temps réel et des moyens pour programmer l'heure de mise en marche différée. Le décompteur de temps offre l'avantage de ne pas nécessiter de mise à l'heure d'une horloge, une simplicité d'utilisation extrême en particulier s'il est mis en oeuvre une fonction de mémorisation automatique du réglage précédent qui est rappelé au premier appui sur le bouton de mise en marche 5. Un bouton de mise à l'arrêt 40 complète avantageusement le dispositif bien qu'il ne soit pas indispensable car la mise à l'arrêt de l'appareil pilote conduit nécessairement le dispositif à couper son alimentation à l'échéance de la temporisation de déconnection automatique. Ainsi, le pilotage des appareils par le dispositif selon l'invention suppose que l'appareil pilote soit préalablement réglé en marche.

La figure 19 illustre l'autre variante pour appareil chauffant en action.

Dans l'exemple décrit précédemment, la figure 19 illustre l'étape du fonctionnement de l'appareil qui suit sa mise en marche. Pendant cette étape de production du café, la puissance nominale de l'appareil est consommée continument. La puissance est en outre continument supérieure au seuil de comparaison 36 préalablement déterminé.

La figure 20 illustre l'autre variante pour appareil chauffant en maintien.

Dans l'exemple décrit précédemment, la figure 20 illustre l'étape du fonctionnement de l'appareil qui suit la fin de la production du café. Cette étape potentiellement sans fin correspond au maintien au chaud du café par des temps de chauffe périodiques résultant de l'action du thermostat compris dans l'appareil. La courbe de puissance caractéristique de cette étape montre des temps de chauffe d'une durée relativement longue qui sont en rapport avec l'inertie thermique de la masse de liquide dont il faut élever la température. La puissance consommée par l'appareil passe alternativement au dessus et en dessous du seuil de comparaison 36 du dispositif permettant à ce dernier de déterminer l'état fonctionnel de maintien au chaud justifié de l'appareil pilote et par conséquent de maintenir sa connexion au réseau électrique.

La figure 21 illustre l'autre variante pour appareil chauffant sans charge.

Dans l'exemple décrit précédemment, la figure 21 illustre l'étape du fonctionnement de l'appareil en maintien au chaud déjà illustrée par la figure 20 lorsque le bol est vide ou lorsque le bol est retiré de la semelle chauffante de l'appareil. L'absence d'inertie thermique provoque une diminution du temps de chauffe mesuré par le dispositif lorsque la puissance est supérieure au seuil de comparaison 36 et le conduit à déconnecter automatiquement les appareils du réseau électrique après constatation que le temps de chauffe est inférieur à un seuil préalablement déterminé. Bien entendu le cas de la mise à l'arrêt de l'appareil pilote ou du débranchement de sa fiche d'alimentation peut être considéré comme le cas particulier d'un temps de chauffe de durée nulle et donc inférieur à toute valeur du seuil 36 préalablement déterminé. Ce cas particulier conduit de manière certaine le dispositif à déconnecter automatiquement les appareils du réseau électrique.

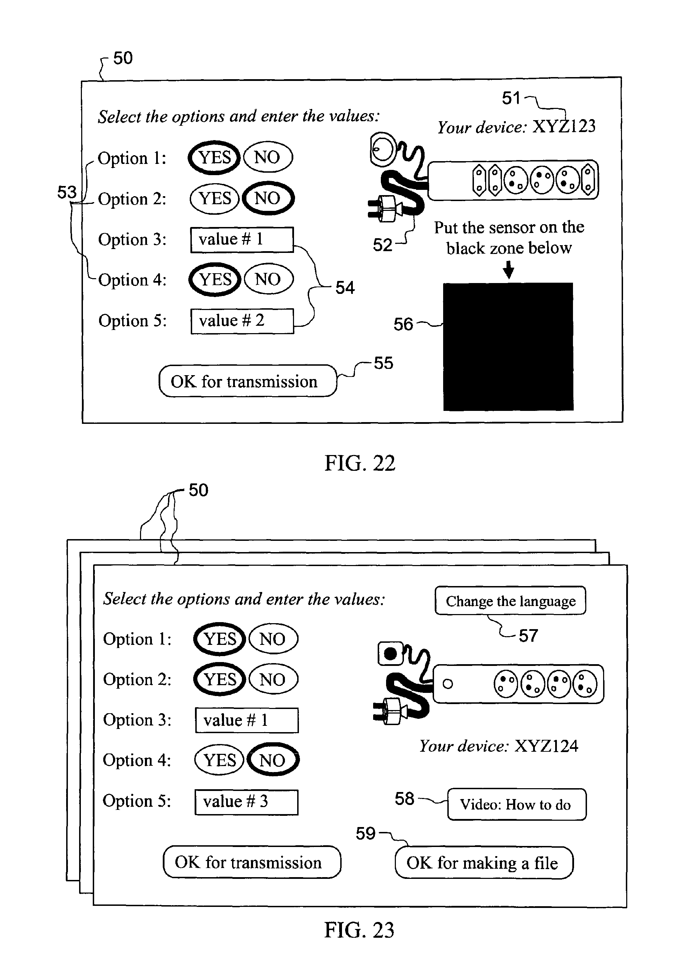

La figure 22 illustre des moyens interactifs pour préparer la configuration. Cet exemple montre un exemple de page 50 pour préparer de manière interactive la configuration d'un dispositif donné. L'étape de préparation de la configuration comprend d'abord une sous-étape d'identification 51 du dispositif à configurer. L'identification du dispositif peut se faire par tous moyens de lecture d'une information d'identification associée au dispositif ou par la saisie explicite par l'utilisateur des éléments d'identification. Par exemple, la sous-étape d'identification peut comprendre une sous-étape de désignation de la marque du dispositif, une sous-étape de désignation de la catégorie de dispositif le cas échéant, une sous-étape de désignation de la référence du dispositif. Lorsque le dispositif à configurer est identifié, il peut être avantageusement affiché une image du dispositif 52 permettant une confirmation visuelle de l'identification. Selon les caractéristiques du dispositif identifié, des options sélectionnables 53 et/ou des valeurs de paramètres réglables 54 sont proposées au préparateur. Des options et des réglages par défaut correspondant aux réglages usine du dispositif sont avantageusement proposés comme valeurs de départ des sélections possibles pour pouvoir ne changer que le ou les paramètres d'intérêt sans devoir traiter exhaustivement l'ensemble des paramètres. Il est aussi prévu dans certaines variantes de mise en oeuvre que seules les choix et/ou les réglages qui intéressent le préparateur sont mis à jour. Les variantes les plus sophistiquées de l'invention comprennent des moyens de transmission bidirectionnels pour échanger des informations entre le dispositif et l'équipement utilisé pour la configuration. Dans ces variantes, l'équipement utilisé pour la configuration lit et affiche les valeurs choix et réglages du dispositif qui sont les valeurs de départ proposées. Lorsque les choix et/ou les réglages effectués pendant l'étape de préparation conviennent au préparateur, selon les variantes de mise en oeuvre, il est proposé une commande 55 pour émettre l'au moins une information en rapport avec la configuration à destination du dispositif par les moyens prévus à cet effet ou il est proposé une émission continue en boucle avec mise à jour automatique au fur et à mesure des choix du préparateur.

Il est prévu dans certaines variantes de mise en oeuvre, de transmettre l'au moins une information en rapport avec la configuration au dispositif en utilisant une zone de l'écran 56 ou il est prévu de poser un capteur optique du dispositif. L'information étant transmise par une modulation binaire de l'émission de lumière à 0 ou 100% de la luminosité maximum. Dans d'autres variantes, la transmission de l'au moins une information en rapport avec la configuration utilise la chaine de restitution du son ou encore une liaison avec un port d'entrée sortie de l'équipement.

Les traitements associés à la préparation interactive de la configuration sont exécutés localement dans l'appareil supportant l'interaction avec l'utilisateur ou sur un serveur distant. Tout appareil doté d'un écran et de moyens permettant d'entrer les choix du préparateur convient à l'exécution de cette étape. Il peut s'agir par exemple d'un ordinateur, d'un téléviseur numérique, d'une Set Top Box utilisant en écran externe et par exemple une télécommande pour les sélections. Sont également utilisable les Smartphones capables de télécharger des applications spécifiques ou disposant d'un navigateur pour exécuter des scripts et/ou accéder à des pages issues d'un serveur distant connecté au réseau.

La figure 23 illustre d'autres moyens pour préparer la configuration.

Cet exemple illustre une variante plus sophistiquée de support de l'interactivité utilisant un écran pour préparer la configuration. Il y est proposé potentiellement plusieurs pages ou une page plus grande que la fenêtre de visualisation et des choix supplémentaires tels que le choix de la langue utilisée 57. Il est proposé avantageusement d'accéder à des aides et/ou à des vidéos explicatives 58. Outre les possibilités de transmission au dispositif sur commande ou automatiquement en boucle qui ont été décrites précédemment, il est aussi prévu une commande 59 pour produire un fichier contenant l'au moins une information en rapport avec la configuration. Ce fichier étant apte à être exploité ultérieurement par une application en rapport avec les moyens pour transmettre l'information au dispositif. Cette possibilité illustre une caractéristique particulièrement avantageuse du procédé selon l'invention qui est la séparation possible des étapes de préparation et d'émission. Ainsi des fichiers correspondant à des préparations types pour des dispositifs et des cas d'usage donnés fréquents peuvent être préparés par des professionnels et proposés en téléchargement, par exemple sur les sites web des marques des dispositifs, pour que des utilisateurs grand-public sans aucune culture technique soient en mesure de lire ces fichiers au moyen d'applications courantes pour configurer leurs dispositifs. Il est prévu que l'application de préparation nomme automatiquement le fichier en utilisant des chaines de caractère issues des informations d'identification du dispositif et éventuellement d'autres informations en rapport avec les principaux choix effectués. Ainsi le nom du fichier qui est produit à la fin de l'étape de préparation donne en clair un premier niveau d'information facilitant l'exploitation ultérieure du fichier. Encore plus avantageusement, de l'information descriptive supplémentaire est incluse dans les fichiers. Il s'agit par exemple de métadonnées permettant une recherche multicritère. Lorsque l'au moins une information en rapport avec la configuration est codée sous la forme d'un fichier audio numérique dans un standard reconnu comme mp3, wma, flac, Ogg, wave ou autres, les systèmes natifs de métadonnées prévus pour la musique tels que ID3 tag, seront avantageusement réutilisés dans le cadre de l'invention, y compris la possibilité d'inclure dans le fichier la photo du dispositif dans l'espace prévu pour la couverture d'un album musical. Il en va de même dans le cas de l'utilisation de standards pour le codage de la vidéo numérique, par exemple MPEG 1/2/4, wmv flv, avi, rm, rmvb etc. Il est prévu de transmettre l'au moins une information en rapport avec la configuration préférentiellement en utilisant la chaine de restitution du son, qu'il s'agisse de moyens exclusivement dédiés au son ou de moyens dédiés à la vidéo dont tout ou partie de la chaine audio associée est utilisée dans le cadre de l'invention. Il est aussi prévu dans certaines mises en oeuvre d'utiliser la chaine de restitution de l'image.

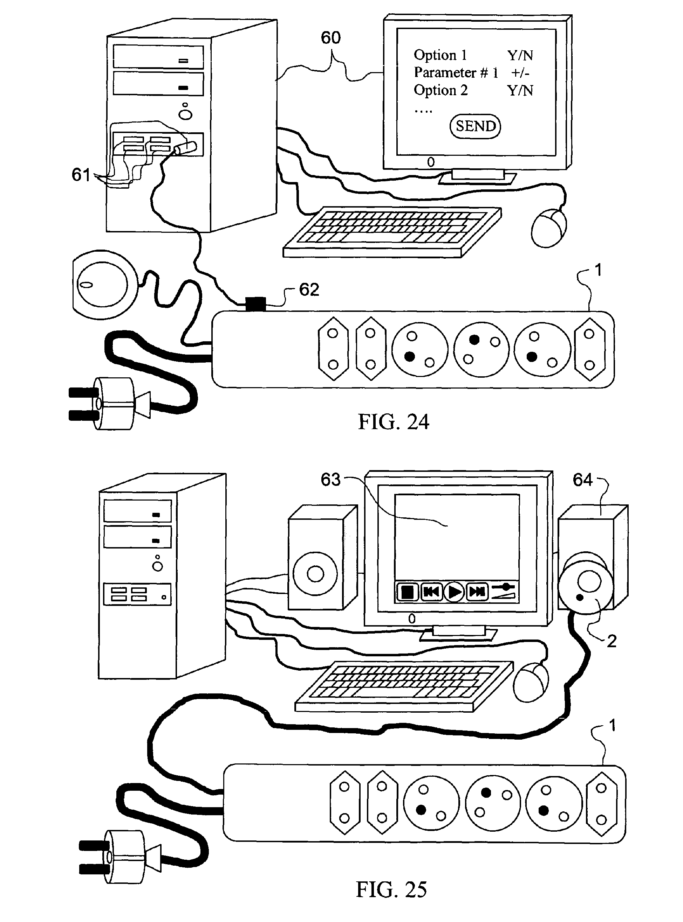

La figure 24 illustre la configuration interactive au moyen d'un ordinateur.

Il est prévu d'utiliser tout moyen accessible au grand public pour exécuter localement ou sur un serveur distant une application pour préparer l'au moins une information en relation avec la configuration et le cas échéant pour la transmettre au dispositif à configurer.

Les appareils concernés sont par exemple des ordinateurs fixes 60 ou portables ainsi qu'un nombre croissant d'appareils de poche comme par exemple des Smartphones. Ces appareils sont le support de l'interaction avec l'utilisateur pour produire l'au moins une information en relation avec la configuration à partir de choix de l'utilisateur comme illustré par les exemples des figures 22 et 23. Il est prévu que les mêmes moyens soient aussi utilisés pour émettre l'information vers le dispositif 1 à configurer. Il est prévu que tout port d'entrée/sortie générique 61 ou que toute ressource intégrée en rapport avec la restitution du son et/ou de l'image offert par un équipement standard peut être utilisé pour émettre l'au moins une information. La figure 24 illustre l'utilisation d'un port de sortie pour écouteurs qui est utilisé dans cet exemple pour connecter le primaire d'un inducteur magnétique 62 qui émet l'information qui est reçue par le dispositif au moyen d'un inducteur secondaire placé derrière la paroi isolante du boitier du dispositif. Il est aussi prévu que d'autres ports d'entrée sortie tels que USB, ieee 1394, sortie ligne analogique ou numérique ou encore des moyens de connexion sans fil tels que WiFi, Bluetooth, FM TX soient utilisés en mettant en oeuvre des moyens appropriés pour émettre et/ou pour recevoir l'information sans sortir du cadre de l'invention.

La figure 25 illustre la configuration par le son issu d'un ordinateur.

Cet exemple illustre l'utilisation de tout moyen standard 63 pour lire des fichiers audio et/ou vidéo comprenant une bande son pour émettre l'au moins une information en relation avec la configuration vers le dispositif à configurer. Les fichiers contiennent l'au moins une information en rapport avec la configuration et ont été produits préalablement au cours de l'étape de préparation. Dans cet exemple, le dispositif 1 comprend un microphone, sous sa commande déportée 2, qui permet de recevoir l'au moins une information émise par un haut-parleur 64 reproduisant le son encodé dans le fichier. Avantageusement, s'il s'agit d'un fichier vidéo, l'écran peut afficher par exemple des instructions sous forme de textes, d'animations ou de séquences vidéo. Dans le cas de la reproduction du son à plusieurs canaux, il est prévu qu'un canal soit réservé à l'au moins une information en rapport avec la configuration et le ou les autres canaux diffusent des contenus différents, par exemple des informations en rapport avec le contenu de la configuration et/ou avec le mode opératoire pour configurer le dispositif.

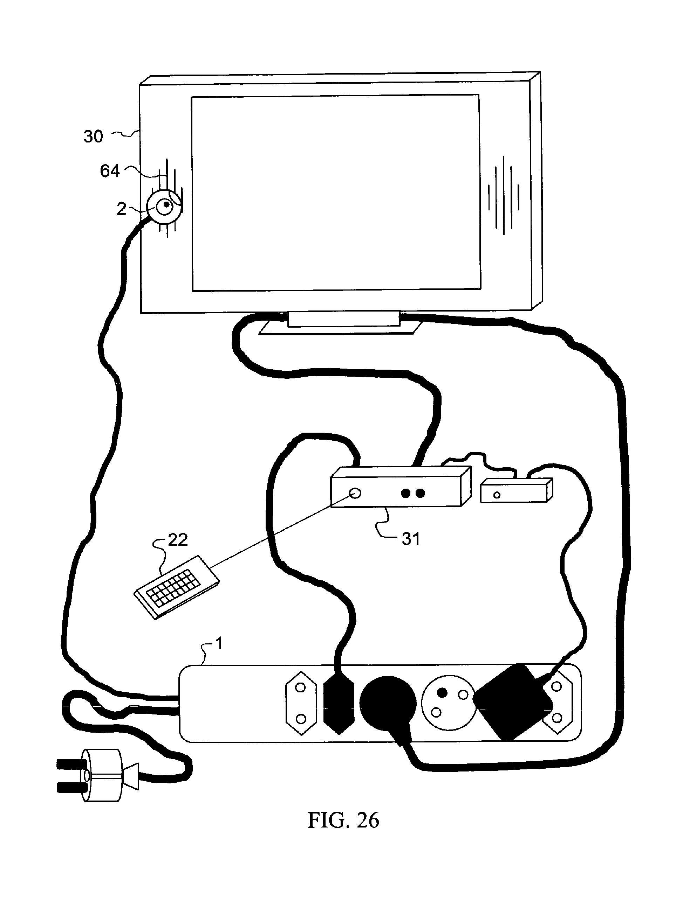

La figure 26 illustre la configuration par le son issu d'un téléviseur.

Cet exemple illustre la possibilité d'utiliser les ressources de reproduction du son et/ou de l'image d'un téléviseur 30 pour émettre l'au moins une information en rapport avec la configuration après le cas échéant la réception ou le téléchargement de l'objet multimédia correspondant ou encore après une étape de préparation de l'au moins une information. Il est prévu que l'interaction avec l'utilisateur pour la préparation de l'au moins une information en rapport avec la configuration soit mise en oeuvre par des moyens compris dans le téléviseur ou dans un équipement externe tels qu'une Set Top Box 31 connectée au téléviseur. L'utilisateur choisit des options à l'écran et/ou entre des valeurs en utilisant une télécommande 22. Dans cet exemple, l'au moins une information en rapport avec la configuration du dispositif 1 est émise par le haut-parleur 64 du téléviseur 30 et reçue par un microphone placé sous le boîtier de commande déportée 2.

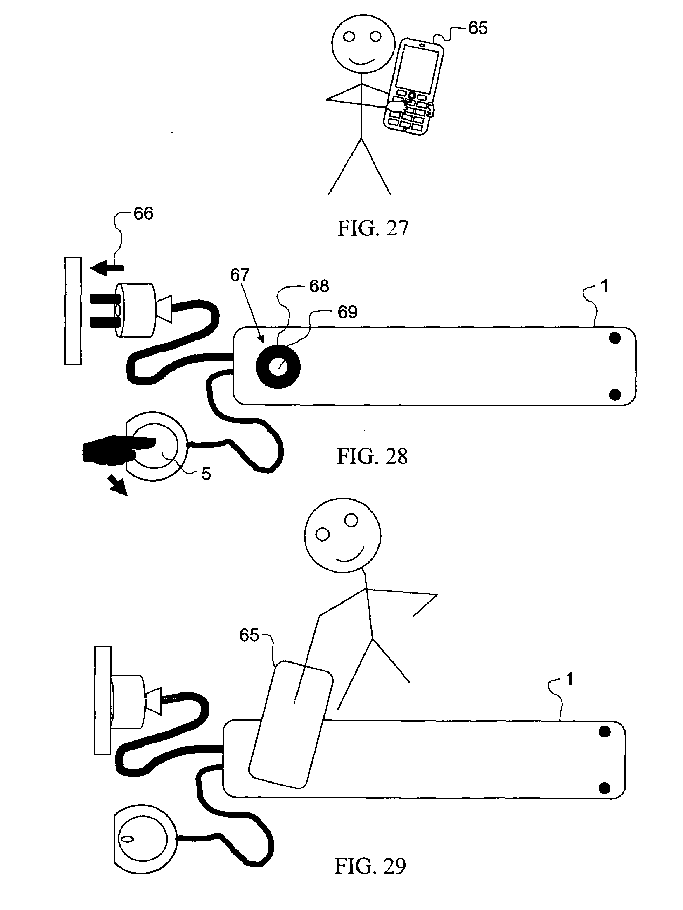

La figure 27 illustre la configuration au moyen d'un téléphone étape 1.

Il s'agit d'une mise en oeuvre particulièrement préférée du procédé selon l'invention dans le cadre d'un système comprenant un dispositif configurable selon l'invention et un téléphone standard 65 utilisé à la fois comme équipement pour produire au moins une information en rapport avec la configuration du dispositif et comme équipement pour l'émettre à destination du dispositif à configurer. Il est prévu que tout téléphone soit utilisable dans le cadre de l'invention, un téléphone filaire, un téléphone sans fil domestique par exemple DECT, sans fil cellulaire de toute génération ou terminaux VoIP sur réseaux IP. Il est prévu dans une première variante que seules les fonctions vocales de base soient sollicitées en utilisant un serveur vocal pour présenter les choix à l'utilisateur, et le cas échéant les explications et/ou des messages à caractère promotionnel. Les choix de l'utilisateur étant connus du serveur par la détection d'appuis sur les touches du téléphone et/ou par des capacités de reconnaissance vocale dans le serveur. Il est aussi prévu de mettre en oeuvre l'invention par le biais d'applications téléchargeables dans des Smartphones tels que l'iPhone, les téléphones Android, les téléphones Windows mobile, Blackberry etc. Au cour de la première étape du procédé selon l'invention, l'utilisateur permet au serveur d'identifier le dispositif à configurer. Il est prévu une désignation explicite par des choix dans une arborescence de propositions ou encore pour les téléphones munis d'un appareil photo et dans la mesure ou le serveur le permet, l'identification peur se faire par reconnaissance du dispositif par l'image dans une photo comprenant des éléments caractéristiques. Il peut s'agir par exemple d'une prise de vue de la face avant, où sont inscrits la marque et le modèle du dispositif, ou une étiquette regroupant des informations sur le dispositif. Il est aussi prévu d'identifier le dispositif par une prise de vue puis une reconnaissance automatique du code barres qui lui est associé. Lorsque le dispositif est au moins partiellement identifié, le serveur propose des choix en rapport avec la configuration du dispositif.

La figure 28 illustre la configuration au moyen d'un téléphone étape 2.

Cette figure illustre une étape qui concerne le dispositif. Il s'agit de placer le dispositif 1 en situation de recevoir l'au moins une information en rapport avec sa configuration. Cette étape optionnelle est néanmoins avantageuse en ce qu'elle vise à empêcher toute modification non souhaitée de la configuration du dispositif. Ceci est une précaution utile lorsque l'au moins une information en rapport avec la configuration du dispositif est transportée par un support tel que le son ou la lumière qui peuvent se trouver dans l'environnement d'utilisation du dispositif. Dans l'exemple proposé, l'entrée dans le mode de réception de l'au moins une information en rapport avec sa configuration se fait en appuyant sur un bouton 5 à la mise sous tension 66 du dispositif 1. Cela pourrait aussi se faire par exemple par appui sur une combinaison de touches particulière ou sur un bouton dédié à la configuration. Il est prévu dans certaines variante que ladite étape de préparation ne soit qu'une étape de sélection de l'au moins une information en rapport avec sa configuration parmi un ensemble de versions préalablement préparées. Il est prévu avantageusement une pièce de couplage 67 réalisés dans un matériau souple par exemple une mousse compacte ou du silicone pour assurer un couplage acoustique efficace à la fois avec des moyens d'émission ayant une surface plane qui viennent en appui sur la surface extérieure 68 de la pièce de couplage et avec des écouteurs individualisés présentant généralement un diamètre extérieur de l'ordre de 16 mm. La dite pièce de couplage présente un alésage 69 de l'ordre de 14 mm de diamètre qui est apte à permettre l'insertion et le maintien par l'élasticité du matériau d'un écouteur standard. L'épaisseur de la pièce de couplage et la nature du matériau lui permet en outre de faire fonction de point d'appui sous le boîtier du dispositif au contact de la surface de pose.

La figure 29 illustre la configuration au moyen d'un téléphone étape 3.

Cette figure illustre l'étape d'émission par le téléphone de l'au moins une information en rapport avec la configuration du dispositif. Il est prévu selon les variantes que l'exécution de cette étape soit automatique à la fin de l'étape préparation ou qu'elle soit exécutée sur commande explicite de l'utilisateur. Dans cette exemple, après avoir le cas échéant effectué une commande appropriée, l'utilisateur place le téléphone 65 et/ou le dispositif 1 de manière à ce que le dispositif reçoive l'au moins une information en rapport avec sa configuration émise par le téléphone. Dans cet exemple l'orifice de sortie du son du téléphone est plaqué contre la surface plane de la pièce de couplage.

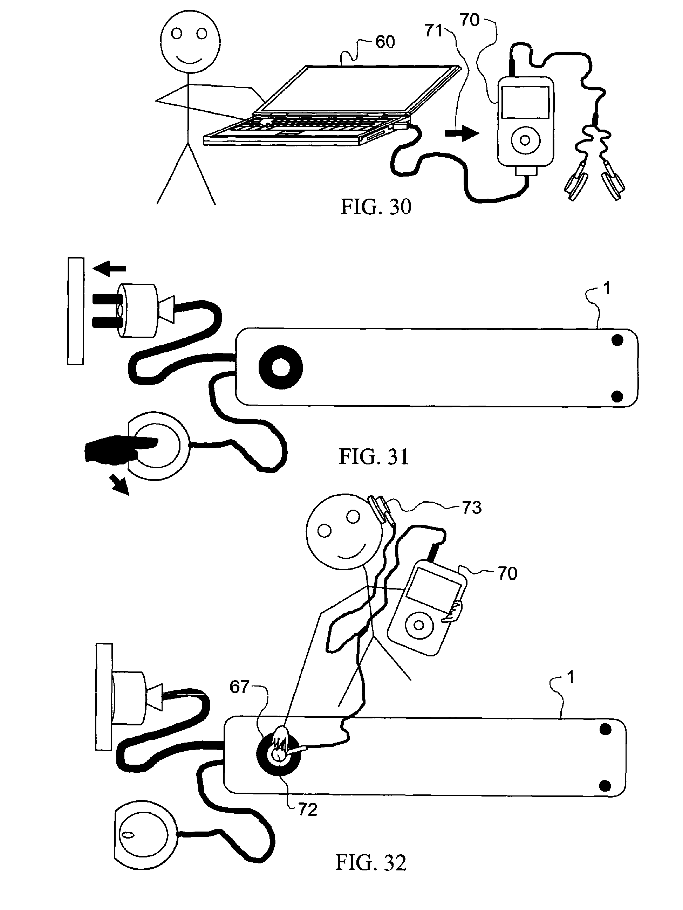

La figure 30 illustre la configuration au moyen d'un baladeur étape 1.

Il s'agit d'une mise en oeuvre préférée du procédé selon l'invention dans le cadre d'un système comprenant un dispositif 1 configurable selon l'invention et un baladeur ou une fonction de lecture multimédia d'un appareil portable multifonction. Le baladeur est utilisé dans cet exemple seulement pour émettre l'au moins une information en rapport avec la configuration du dispositif. Bien entendu, il serait aussi possible d'exécuter une étape de préparation sur le même appareil dans le cas d'un baladeur plus sophistiqué capable de recevoir et d'exécuter des applications spécifiques ou capable d'accéder à Internet et/ou d'exécuter des aplets Java, des scripts, des programmes exécutables dans un navigateur Internet tels que par exemple ceux écrits en Flash. Dans l'exemple de la figure 30, l'utilisateur prépare et/ou reçoit de l'extérieur, par exemple par téléchargement sur Internet, un objet numérique préalablement préparé. Cet objet numérique est par exemple un fichier audio, vidéo, ou un fichier associé à une animation. Le fichier, dont on a préalablement vérifié la compatibilité du format avec les possibilités de lecture du baladeur est copié dans la mémoire du baladeur par tout moyen filaire ou non filaire.

La figure 31 illustre la configuration au moyen d'un baladeur étape 2.

Ouverture de la session de configuration du dispositif 1 comme décrit pour la figure 28 dans le contexte de l'utilisation d'un baladeur au lieu d'un téléphone.

La figure 32 illustre la configuration au moyen d'un baladeur étape 3.

Cette figure illustre l'étape d'émission par le baladeur 70 de l'au moins une information en rapport avec la configuration du dispositif 1. L'utilisateur commande la lecture de l'objet numérique contenant l'au moins une information en rapport avec la configuration du dispositif après l'avoir placé dans une position dans laquelle le dispositif est apte à la recevoir. Des raffinements sont prévus tels que la répétition à plusieurs reprises de l'au moins une information au cours de la lecture du fichier. Ainsi les chances d'obtenir une réception complète par le dispositif sont augmentées. Ce raffinement est complété dans le dispositif par la fermeture de la session de configuration est automatique dès que l'au moins une information complète et valide à été reçue ce qui évite tout problème de réception incomplète en cas de répétition de l'émission. Très avantageusement, s'agissant de moyens de reproduction du son stéréophonique, un seul canal 72 sera utilisé pour transporter l'au moins une information en rapport avec la configuration, l'autre canal 73 sera utilisé pour émettre des informations à destination de l'utilisateur. La reproduction du son par des écouteurs individualisés se prête bien à cette particularité de l'invention. L'utilisation avantageuse d'une pièce de couplage 67 telle que décrite dans le cadre de la figure 28 permet d'améliorer le couplage acoustique tout en maintenant l'écouteur 72 par serrage dans la position adéquate après insertion dans l'alésage de la pièce 67.

Bien entendu, l'invention n'est pas limitée aux exemples qui viennent d'être décrits et de nombreux aménagements peuvent être apportés à ces exemples sans sortir du cadre de l'invention, notamment en ce qui concerne le nombre, le type et la position des connecteurs, la manière d'agencer l'interface avec l'utilisateur. Les standards et normes qui sont cités dans ce document à titre d'exemple ne sont en rien limitatifs, leurs équivalents ainsi que leurs successeurs entrent dans le cadre de l'invention.

Plus particulièrement selon son deuxième aspect, l'invention prévoit un dispositif comprenant au moins un microprocesseur et une mémoire non-volatile, le dispositif comprend en outre des moyens pour recevoir au moins une information en rapport avec sa configuration, l'au moins une information étant émise par un équipement externe.

Le dispositif prévoit en outre que les informations reçues par le dispositif sont émises par l'intermédiaire de moyens au moins en partie aptes à la reproduction du son en relation avec un équipement externe.

Le dispositif prévoit en outre que les moyens mis en oeuvre pour recevoir les informations émises par l'intermédiaire de moyens au moins en partie aptes à la reproduction du son en relation avec un équipement externe sont en outre aptes à émettre des sons.

Le dispositif prévoit en outre une pièce de couplage acoustique possédant une face apte à être placée en contact avec une paroi et un alésage apte à recevoir un écouteur.

Le dispositif prévoit en outre que tout ou partie de sa configuration est préparée à partir d'un équipement externe distinct dudit dispositif, ledit équipement externe étant apte à interagir avec l'utilisateur, l'information en relation avec la configuration étant transmise par un équipement externe au dispositif qui la stocke, possiblement après transformation, dans une mémoire non volatile, le dispositif adaptant tout ou partie de ses caractéristiques fonctionnelles en conséquence.

Le dispositif comprend en outre des moyens pour configurer de manière autonome au moins une de ses caractéristiques fonctionnelles.

L'invention prévoit un procédé pour configurer un dispositif selon l'invention qui comprend :
- une étape de préparation de l'au moins une information en rapport avec la configuration du dispositif, cette étape étant exécutée à partir des ressources d'un équipement, distinct dudit dispositif, ledit équipement étant apte à interagir avec l'utilisateur; et
- une étape d'émission d'au moins une information en rapport avec la configuration du dispositif par un équipement pouvant être confondu avec, ou distinct de, celui ayant exécuté l'étape de préparation de la configuration; et
- une étape de réception par le dispositif d'au moins une information en rapport avec sa configuration; et
- une étape de stockage dans une mémoire non-volatile du dispositif de tout ou partie de l'au moins une information en rapport avec sa configuration reçue, après transformation partielle ou totale le cas échéant; et
- une étape d'exécution des fonctions du dispositif mettant en oeuvre tout ou partie de l'au moins une information en rapport avec sa configuration reçue, après transformation partielle ou totale le cas échéant.

Le procédé selon l'invention prévoit en outre que l'exécution de ladite étape de préparation et/ou de ladite étape d'émission d'au moins une information en rapport avec la configuration du dispositif comprend en outre une étape d'identification dudit dispositif.

Le procédé selon l'invention prévoit en outre que l'exécution de l'étape d'émission d'au moins une information en rapport avec la configuration du dispositif est conditionnée par l'exécution d'une étape préalable de demande explicite d'émission de l'au moins une information en rapport avec la configuration du dispositif.

Le procédé selon l'invention prévoit en outre que l'étape d'émission de l'au moins une information en rapport avec la configuration du dispositif et l'étape de préparation de la configuration sont exécutées automatiquement en boucle et que l'au moins une information en rapport avec la configuration du dispositif est automatiquement mises à jour en conséquence.

Le procédé selon l'invention prévoit en outre que l'étape d'émission de l'au moins une information en rapport avec la configuration du dispositif est associée à la lecture d'une information sonore et/ou visuelle destinée à l'utilisateur.

Le procédé selon l'invention prévoit en outre que les conséquences sur le dispositif de l'exécution de ladite étape de préparation et/ou de ladite étape d'émission d'au moins une information en rapport avec la configuration du dispositif est conditionnée par l'exécution d'une étape préalable d'ouverture de session de configuration exécutée dans le dispositif.

Le procédé selon l'invention prévoit en outre que la réception et/ou le stockage et/ou la mise en oeuvre de tout ou partie de l'au moins une information en rapport avec la configuration du dispositif reçue, après transformation partielle ou totale le cas échéant, est conditionnée par la réception d'une information caractéristique du dispositif.

L'invention prévoit un système pour mettre en oeuvre le procédé selon l'invention qui comprend :
Un dispositif selon l'invention; et
Au moins un équipement pour produire au moins une information en rapport avec la configuration du dispositif; et
Un équipement pour émettre au moins une information en rapport avec la configuration du dispositif, l'au moins un équipement pour produire l'au moins une information en rapport avec la configuration pouvant être confondu avec, ou distinct de, celui pour l'émettre.

L'invention prévoit l'utilisation du procédé selon l'invention pour configurer des appareils destinés à être connecté au réseau électrique basse tension alternatif ou à un réseau très basse tension continu, ou encore pour configurer des appareils alimentés par des moyens autonomes tels que des équipements d'installation du bâtiment ou des véhicules, des gadgets ou des jouets.

L'invention prévoit l'utilisation du procédé selon l'invention pour configurer d'une manière alternative des appareils qui embarquent des moyens permettant de les configurer en tout ou partie.

L'invention prévoit l'utilisation du procédé selon l'invention pour configurer des appareils à partir de profils de configuration préparés préalablement par des tiers.

## Revendications

1. Dispositif pour déconnecter l'alimentation électrique d'au moins un appareil, l'au moins un appareil comprenant au moins un appareil dit pilote principal, le dispositif comprenant, des moyens de raccordement au réseau électrique, des moyens pour raccorder l'alimentation électrique de l'au moins un appareil, au moins un moyen pour connecter et déconnecter l'alimentation électrique de l'au moins un appareil, des moyens pour piloter l'alimentation électrique de l'au moins un appareil en relation avec l'état fonctionnel de l'au moins un appareil pilote principal et/ou d'une commande de l'utilisateur, ledit dispositif étant **caractérisé en ce qu'**il comprend en outre des moyens pour permettre au moins un mode de fonctionnement en dérogation par rapport au mode de fonctionnement standard d'un dispositif qui connecte ou qui maintient la connexion de l'alimentation électrique de l'au moins un appareil lorsque l'au moins un appareil pilote principal est en marche et qui déconnecte l'alimentation électrique de l'au moins un appareil lorsque l'au moins un appareil pilote principal est en veille ou à l'arrêt, ledit mode de fonctionnement en dérogation conduit le dispositif à établir ou à maintenir la connexion au réseau électrique de au moins un appareil bien que l'au moins un appareil pilote principal est dans un état fonctionnel d'arrêt ou de veille, et/ou ledit mode de fonctionnement en dérogation conduit le dispositif à déconnecter du réseau électrique au moins un appareil bien que l'au moins un appareil pilote principal est dans un état fonctionnel de marche.

2. Dispositif selon la revendication 1, **caractérisé en ce qu'**il est mis en oeuvre sous une forme décentralisée comprenant au moins deux boitiers comprenant chacun en outre des moyens de raccordement au réseau électrique et des moyens pour transmettre de manière bidirectionnelle ou unidirectionnelle des informations entre l'au moins deux boîtiers.

3. Dispositif selon l'une quelconque des revendications 1 ou 2, **caractérisé en ce que** la déconnexion du réseau électrique d'au moins un appareil est en outre déterminée, par la détection ou par l'absence de détection pendant un temps préalablement déterminé, d'un événement sans rapport direct avec l'état fonctionnel de l'au moins un appareil pilote principal.

4. Dispositif selon l'une quelconque des revendications précédentes, **caractérisé en ce qu'**il comprend en outre des moyens de mesure donnant une information représentative de la puissance consommée par l'au moins un appareil pilote principal et des moyens pour déterminer l'état fonctionnel de l'au moins un appareil pilote principal, par comparaison entre ladite information et au moins un premier seuil préalablement déterminé, ou à partir de la mesure de la durée pendant laquelle la puissance consommée par l'appareil pilote principal est supérieure ou égale à un premier seuil préalablement déterminé et/ou à partir de la mesure de la durée pendant laquelle la puissance consommée par l'appareil pilote principal est inférieure à un premier seuil préalablement déterminé.

5. Dispositif selon l'une quelconque des revendications précédentes, **caractérisé en ce qu'**il comprend en outre des moyens pour connecter et pour alimenter de manière permanente au moins un appareil.

6. Dispositif selon la revendication 5, **caractérisé en ce qu'**il comprend en outre des moyens de mesure donnant une information représentative de la puissance consommée par l'au moins un appareil dit l'au moins un appareil pilote secondaire, des moyens pour déterminer l'état fonctionnel de l'au moins un appareil pilote secondaire par comparaison entre ladite information et au moins un second seuil préalablement déterminé, des moyens pour alimenter en énergie au moins un autre appareil lorsque la puissance consommée par l'au moins un appareil pilote secondaire est supérieure ou égale à un second seuil préalablement déterminé quelle que soit la puissance consommée par l'au moins un appareil pilote principal, et pour couper l'alimentation électrique d'au moins un autre appareil lorsque la puissance consommée par l'au moins un appareil pilote secondaire est inférieure à un second seuil préalablement déterminé et lorsque la puissance consommée par l'au moins un appareil pilote principal est inférieure à un premier seuil préalablement déterminé.

7. Dispositif selon la revendication 6, **caractérisé en ce que** l'au moins un autre appareil dont il s'agit de commander l'alimentation électrique en fonction de la puissance consommée par l'au moins un appareil pilote secondaire ne comprend pas au moins un appareil pilote principal.

8. Dispositif selon l'une quelconque des revendications précédentes, **caractérisé en ce qu'**il comprend en outre des moyens pour recevoir et pour interpréter au moins une commande en relation avec le mode de fonctionnement en dérogation.

9. Dispositif selon l'une quelconque des revendications précédentes, **caractérisé en ce qu'**il comprend en outre des moyens pour gérer au moins en partie automatiquement l'entrée et/ou la sortie du mode de fonctionnement en dérogation.

10. Dispositif selon l'une quelconque des revendications précédentes, **caractérisé en ce qu'**il comprend en outre une horloge temps réel et/ou un compteur de temps.

11. Dispositif selon l'une quelconque des revendications précédentes, **caractérisé en ce qu'**il comprend en outre des moyens pour signaler un fonctionnement en dérogation.

12. Dispositif selon l'une quelconque des revendications précédentes, **caractérisé en ce qu'**il comprend en outre des moyens pour connecter et pour gérer de manière appropriée au moins un appareil portable comprenant une source d'énergie autonome rechargeable.

13. Dispositif selon l'une quelconque des revendications précédentes, **caractérisé en ce qu'**il comprend en outre des moyens sans fils ajoutés pour transmettre des commandes à au moins un équipement externe.

14. Utilisation du dispositif selon l'une quelconque des revendications 1 à 13 pour économiser de l'énergie par la suppression de la consommation électrique en veille d'au moins un appareil, tout en offrant à un appareil d'enregistrement continument alimenté en énergie électrique la capacité d'activer et/ou de désactiver l'alimentation électrique d'au moins un autre
appareil audio-visuel tel qu'un dispositif de stockage externe, un tuner etc., l'au moins un autre appareil audio-visuel pouvant en outre avoir son alimentation électrique activée et/ou de désactivée en fonction de l'état fonctionnel d'au moins un appareil pilote tel qu'un téléviseur.

15. Utilisation du dispositif selon l'une quelconque des revendications 1 à 13 pour économiser de l'énergie par la suppression de la consommation électrique en veille d'au moins un appareil, tout en offrant à un appareil de type Set Top Box continument alimenté en énergie électrique la capacité d'activer et/ou de désactiver l'alimentation électrique d'au moins un autre appareil, l'au moins un autre appareil pouvant en outre avoir son alimentation électrique activée et/ou de désactivée en fonction de l'état fonctionnel d'au moins un appareil pilote tel qu'un téléviseur.

16. Utilisation du dispositif selon l'une quelconque des revendications 1 à 13 pour économiser de l'énergie par la suppression de la consommation électrique en veille d'un appareil électroménager et/ou pour diminuer le risque de dégâts des eaux dont il peut être la cause, tout en offrant à l'appareil électroménager la possibilité d'un départ différé pour bénéficier d'un tarif avantageux de l'énergie électrique.

17. Utilisation du dispositif selon l'une quelconque des revendications 1 à 13 pour économiser de l'énergie par la suppression de consommations électriques inutiles d'un appareil chauffant et/ou pour diminuer le risque d'incendie dont il peut être la cause.
